# EUROPEAN PATENT APPLICATION

(11) **EP 4 697 836 A1**
(43) Date of publication of application: **18.02.2026**
(21) Application number: 24813802.6
(22) Date of filing: 11.03.2024
(51) Int. Cl.: H04W 72/121

(54) **COMMUNICATION METHOD, AND DEVICE, MEDIUM AND CHIP**

(30) Priority: 30.05.2023 CN 202310627330
(71) Applicant: Honor Device Co., Ltd., Shenzhen, Guangdong 518040 (CN)
(72) Inventor: SHI, Shaohong, Shenzhen, Guangdong 518040 (CN); SU, Hanzhang, Shenzhen, Guangdong 518040 (CN)
(74) Representative: Gill Jennings & Every LLP
(86) International application number: PCT/CN2024/080909
(87) International publication number: WO 2024/244596

(57) **Abstract**

This application relates to the field of communication technologies, and provides a communication method, a device, a medium, and a chip. When an electronic device operates by using two wireless communication modules, if it is detected that interference exists between the two wireless communication modules, in a communication process, a quantity of scheduled receive antennas in one of the wireless communication modules is increased, to increase a signal-to-noise ratio of a received signal of the wireless communication module. Specifically, the method includes: detecting that the electronic device receives a first downlink signal by using a first antenna in a first communication module, and detecting that the first communication module operates on a first operating frequency band and the second communication module operates on a second operating frequency band, where the first operating frequency band and the second operating frequency band meet an interference condition; and adding scheduling of a second antenna in the first communication module to receive the first downlink signal.

## Description

This application claims priority to Chinese Patent Application No. 202310627330.2, filed with the China National Intellectual Property Administration on May 30, 2023 and entitled "COMMUNICATION METHOD, DEVICE, MEDIUM, AND CHIP", which is incorporated herein by reference in its entirety.

### TECHNICAL FIELD

This application relates to the field of communication technologies, and in particular, to a communication method, a device, a medium, and a chip.

### BACKGROUND

Electronic devices such as mobile phones and tablets generally support a plurality of wireless communication technologies, for example, support both a wireless local area network (wireless fidelity, Wi-Fi) and a cellular network (cellular). However, in some use scenarios, the electronic device may access the Wi-Fi network and the cellular network by using two communication modules. For example, the two communication modules are both used in coexistence scenarios such as Wi-Fi access and a cellular network call, Wi-Fi hotspot sharing and cellular network running data services, distributed communication, and multi-network collaboration.

When the two communication modules of the electronic device both operate, adjacent-channel interference or harmonic interference may occur. This greatly reduces communication quality of the electronic device. For example, if a second harmonic of a 2.4G frequency band of Wi-Fi is about 4.8 GHz~4.96 GHz, which directly falls within a frequency band range of N79 of the 5G cellular network, harmonic interference is generated to seriously affect communication quality of the two systems. For another example, if a 2.4G frequency band of Wi-Fi is adjacent to a 2.5G~2.6G frequency band range of N41 of the cellular network, adjacent-channel interference is generated to affect communication quality of the two systems.

### SUMMARY

Embodiments of this application provide a communication method, a device, a medium, and a chip. When an electronic device operates by using two wireless communication modules, if it is detected that interference exists between the two wireless communication modules, in a communication process, a quantity of scheduled receive antennas in one of the wireless communication modules is increased, to increase a signal-to-noise ratio of a received signal of the wireless communication module.

According to a first aspect, this application provides a communication method, applied to an electronic device, where the electronic device includes a first communication module and a second communication module, and the first communication module includes a first antenna and a second antenna. The method includes: detecting that the electronic device receives a first downlink signal by using the first antenna, and detecting that the first communication module operates on a first operating frequency band and the second communication module operates on a second operating frequency band, where the first operating frequency band and the second operating frequency band meet an interference condition; and adding scheduling of the second antenna to receive the first downlink signal. For example, the first communication module may be a wireless communication module 1, and the second communication module may be a wireless communication module 2. If the first operating frequency band and the second operating frequency band meet the interference condition, it indicates that interference exists between the first communication module and the second communication module. Specifically, communication of the second communication module causes interference to receiving of a downlink signal by the first communication module. In this case, a quantity of scheduled receive antennas in the first communication module is increased, to increase a signal-to-noise ratio of a received signal of the wireless communication module, thereby improving an impact caused by communication of the second communication module on receiving of the downlink signal by the first communication module.

As an example, the first antenna may be an antenna scheduled by the electronic device from the first communication module based on a downlink requirement of a service. For example, the first antenna is an antenna with a maximum received signal strength value in the electronic device.

As an example, the first downlink signal received by the first antenna and the first downlink signal received by the second antenna have same signal content. However, because locations of the first antenna and the second antenna in the first communication module are different, degrees at which the two first downlink signals are interfered with may be different.

In a possible implementation, the method further includes: performing combination processing on the first downlink signal received by the first antenna and the first downlink signal received by the second antenna, to obtain a second downlink signal. In this case, both a signal-to-noise ratio of the first downlink signal received by the first antenna and a signal-to-noise ratio of the first downlink signal received by the second antenna are less than a signal-to-noise ratio of the second downlink signal.

In a possible implementation, the method further includes: determining that the first communication module meets an antenna addition condition and an unused third antenna exists in the first communication module; and adding scheduling of the third antenna to receive the first downlink signal, where the antenna addition condition includes: a received signal strength value of a used antenna in the first communication module is less than a first threshold, and a signal-to-noise ratio of the used antenna in the first communication module is less than a second threshold. If the antenna addition condition is met, it indicates that the received signal of the first communication module is currently still relatively weak and interference exists. In this case, a scheduled antenna still needs to be added to improve a case in which the received downlink signal is interfered with.

In a possible implementation, the method further includes: performing combination processing on the first downlink signal received by the first antenna, the first downlink signal received by the second antenna, and the first downlink signal received by the third antenna, to obtain a third downlink signal. It may be understood that the signal-to-noise ratio of the first downlink signal received by the first antenna, the signal-to-noise ratio of the first downlink signal received by the second antenna, and a signal-to-noise ratio of the first downlink signal received by the third antenna are all less than a signal-to-noise ratio of the third downlink signal.

In a possible implementation, the method further includes: determining that the first communication module meets an antenna addition condition and no unused antenna exists in the first communication module; and continuing to schedule the used antenna in the first communication module to receive the first downlink signal. In this case, the electronic device may schedule all antennas in the first communication module to receive the first downlink signal.

In a possible implementation, the second antenna is an antenna with a maximum received signal strength value among an antenna other than the first antenna in the first communication module; and the third antenna is an antenna with a maximum received signal strength value among an antenna other than the first antenna and the second antenna in the first communication module. That is, the scheduled antenna added by the electronic device from the first communication module is an antenna with optimal receive performance currently.

In a possible implementation, the method further includes: determining that the first communication module meets an antenna reduction condition and the used antenna in the first communication module is greater than a lower limit; and reducing scheduling of one antenna from the used antenna in the first communication module, where the lower limit is a quantity of antennas scheduled from the first communication module based on a downlink service requirement, where the antenna reduction condition includes: the received signal strength value of the used antenna in the first communication module is greater than or equal to the first threshold and is less than a third threshold, and the signal-to-noise ratio of the used antenna in the first communication module is greater than or equal to the second threshold and is less than a fourth threshold. If the antenna reduction condition is met, it indicates that the received signal of the first communication module has relatively strong strength and is interfered with at a relatively low degree.

In a possible implementation, the method further includes: determining that the first communication module meets the antenna reduction condition and the used antenna in the first communication module is equal to the lower limit, where the lower limit is a quantity of antennas scheduled from the first communication module based on a downlink service requirement; and continuing to schedule the used antenna in the first communication module to receive the first downlink signal. In this case, the electronic device may continue to schedule the first antenna in the first communication module to receive the first downlink signal, that is, schedule an original receive antenna in the first communication module to operate.

In a possible implementation, the antenna whose scheduling is reduced from the used antenna in the first communication module is an antenna with a minimum received signal strength value among the used antenna in the first communication module.

In a possible implementation, the interference condition includes: the first operating frequency band and the second operating frequency band belong to two frequency bands in a target coexistence frequency band, where the two frequency bands in the target coexistence frequency band meet at least one of the following conditions: a difference between a maximum value of a range of the first operating frequency band and a minimum value of a range of the second operating frequency band is less than or equal to a preset difference, and in this case, the coexistence frequency band corresponds to adjacent-channel interference; and a difference between an integer multiple of the maximum value of the range of the first operating frequency band and the minimum value of the range of the second operating frequency band is less than or equal to the preset difference, and in this case, the coexistence frequency band corresponds to harmonic interference.

In a possible implementation, the method further includes: determining that the first communication module meets a condition of being interfered with, where the condition of being interfered with includes: a received signal strength value of the first antenna is less than a first threshold, a signal-to-noise ratio SNR of the first antenna is less than a second threshold, and an unused antenna exists in the first communication module; and obtaining the first operating frequency band of the first communication module and the second operating frequency band of the second communication module. It may be understood that, if the condition of being interfered with is met, it indicates that communication of the second communication module causes interference to receiving of the downlink signal by the first communication module, that is, the received signal of the first communication module is a weak signal and is interfered with.

In a possible implementation, the method further includes: determining that a state of at least one of the first communication module and the second communication module changes; and obtaining the first operating frequency band of the first communication module and the second operating frequency band of the second communication module. In this way, as the operating frequency bands of the two communication modules change, it may be determined in real time whether coexistence interference still exists between the two communication modules, to decide whether a scheduled receive antenna needs to be added.

In a possible implementation, the method further includes: determining that the first operating frequency band and the second operating frequency band do not meet the interference condition, which indicates that communication of the second communication module does not cause interference to receiving of the downlink signal by the first communication module; continuing to schedule the first antenna to receive the first downlink signal, to ensure that power consumption is relatively low.

In a possible implementation, the second communication module includes a fourth antenna, and the method further includes: scheduling the fourth antenna to send an uplink signal. In this case, sending of the uplink signal by the second communication module causes interference to receiving of the downlink signal by the first communication module.

In a possible implementation, the first communication module and the second communication module include at least one of the following: a cellular network module, a wireless local area network Wi-Fi module, and a Bluetooth module. For example, both the two communication modules may be cellular network modules.

In a possible implementation, the first communication module is a cellular network module, and received signal strength of a corresponding antenna includes a reference signal received power RSRP; or the first communication module is a Wi-Fi module, and received signal strength of a corresponding antenna includes a received signal strength indicator RSSI.

According to a second aspect, this application provides a readable medium, where the readable medium stores instructions, and when the instructions are executed on an electronic device, the electronic device is enabled to perform the communication method according to any one of the first aspect or the possible implementations of the first aspect.

According to a third aspect, this application provides an electronic device, including: a memory, configured to store instructions to be executed by one or more processors of the electronic device; and a processor, being one of the processors of the electronic device and configured to perform the communication method according to any one of the first aspect or the possible implementations of the first aspect.

According to a fourth aspect, this application provides a chip, including a circuit, where the circuit is configured to perform the communication method according to any one of the first aspect or the possible implementations of the first aspect.

### BRIEF DESCRIPTION OF DRAWINGS

FIG. 1 is a schematic diagram of a structure of a communication system according to an embodiment of this application;
FIG. 2 is a schematic diagram of a structure of an antenna system according to an embodiment of this application;
FIG. 3 is a schematic flowchart a communication method according to an embodiment of this application;
FIG. 4 is a schematic flowchart a communication method according to an embodiment of this application;
FIG. 5 is a schematic flowchart a communication method according to an embodiment of this application;
FIG. 6 is a schematic flowchart a communication method according to an embodiment of this application;
FIG. 7 is a schematic flowchart a communication method according to an embodiment of this application;
FIG. 8 is a schematic flowchart a communication method according to an embodiment of this application;
FIG. 9 is a schematic diagram of a structure of a functional module of an electronic device according to an embodiment of this application;
FIG. 10 is a schematic diagram of a structure of a communication method implemented based on a functional module of an electronic device according to an embodiment of this application;
FIG. 11 is a schematic diagram of a structure of a communication method implemented based on a functional module of an electronic device according to an embodiment of this application;
FIG. 12 is a schematic diagram of a structure of a communication method implemented based on a functional module of an electronic device according to an embodiment of this application;
FIG. 13A is a schematic diagram of a structure of a communication method implemented based on a functional module of an electronic device according to an embodiment of this application;
FIG. 13B is a schematic diagram of a structure of a communication method implemented based on a functional module of an electronic device according to an embodiment of this application;
FIG. 14 is a schematic diagram of a structure of a communication method implemented based on a functional module of an electronic device according to an embodiment of this application; and
FIG. 15 is a schematic diagram of a structure of a mobile phone according to an embodiment of this application.

### DESCRIPTION OF EMBODIMENTS

Illustrative embodiments of this application include but are not limited to a communication method, a device, a medium, and a chip.

It can be learned from Background that, when an electronic device operates by using two wireless communication modules, coexistence interference such as harmonic interference and adjacent-channel interference exists, and the coexistence interference seriously affects communication quality and performance of the two communication modules in the electronic device. The adjacent-channel interference is mutual interference between signals of adjacent or close channels, and sometimes "adjacent-channel" is also referred to as "adjacent-frequency". The harmonic (harmonic wave) interference is interference caused by a harmonic generated in a power grid or a circuit to the power grid or a power consumption device in the power grid. A harmonic is an electricity quantity that is included in a current and whose frequency is an integer multiple of a frequency of a fundamental wave.

To resolve the coexistence interference, a conventional technology is to use a time division manner to allocate different timeslots to the two communication modules in the electronic device by using a central controller, so as to avoid the following case: When one module from performs transmission, the other module performs receiving. Therefore, the two communication modules are prevented from both operating, so as to avoid coexistence interference generated in a coexistence scenario. However, operating of the two communication modules through time division reduces a throughput and increases a delay.

Another conventional technology is to use a frequency division manner to allocate frequencies to the two communication modules in the electronic device by using a central controller, so as to avoid coexistence interference such as adjacent-channel interference or harmonic interference between the two modules. However, the electronic device generally cannot determine an operating frequency of the electronic device, and the frequency follows an access point, such as a base station or a router. Consequently, the solution is not easy to implement.

In another conventional technology, a transmit power backoff manner may be used to reduce a transmit power of each of the two communication modules by using a central controller, so as to reduce a degree at which transmission of one module interferes with receiving of the other module. Although there is no delay in both transmission and receiving in this solution, uplink communication of the electronic device is limited. This reduces communication quality of the two communication modules, and reduces performance of the modules, causing a relatively small benefit.

To resolve the foregoing problem, the embodiments of this application provide a communication method. In this method, when an electronic device operates by using two wireless communication modules, if it is detected that the two wireless communication modules have operating frequency bands whose ranges are close or adjacent to each other, or a frequency band of a harmonic generated by one wireless communication module is adjacent or close to an operating frequency band of the other wireless communication module, in a communication process, a quantity of scheduled receive antennas in one of the wireless communication modules is increased, to increase a signal-to-noise ratio of a received signal of the wireless communication module. For example, when one antenna in one of the wireless communication modules is scheduled as a receive antenna, another receive antenna may be forcibly newly scheduled for the wireless communication module, so that the wireless communication module can receive signals by using the two receive antennas, and the two received signals are combined into one received signal. This may increase an overall signal-to-noise ratio (signal to noise ratio, SNR) of the received signal of the wireless communication module. In this case, the signal-to-noise ratio of the received signal is increased after a receive antenna in one of the wireless communication modules in the electronic device is forcibly added, thereby reducing a degree at which transmission of the other wireless communication module affects receiving of the wireless communication module, that is, optimizing coexistence interference such as harmonic interference or adjacent-channel interference between the two wireless communication modules.

It may be understood that the wireless communication module in the electronic device may implement a sending function and a receiving function based on an antenna system. The antenna system is a system that includes a transmit antenna and a receive antenna. The transmit antenna operates as TX, the receive antenna operates as RX, RX is "receive" (receive), and TX is "send" (transport). For example, the antenna system is a multi-antenna system that includes a plurality of antennas, or a single-antenna system that includes only one antenna.

Generally, an antenna that can perform both transmission and receiving (namely, duplex communication) is referred to as a main, and an antenna that can perform only receiving is referred to as a diversity, and the diversity may also be referred to as a receive diversity.

A diversity technology is a technology in which a transmit end transfers one or more signals of a same message, and a receive end recovers, by using a selection or combination circuit, the transferred message from two or more signals that are differently interfered with and that are of the message, to obtain a message whose quality is better than that obtained by using any single signal.

In some embodiments, when a message is transmitted between a server and the electronic device, the message may be transmitted by using one or more signals, and a plurality of signals of one transmitted message are partially the same or all the same. Correspondingly, the electronic device may separately receive a same signal by using a plurality of antennas in one of the wireless communication modules, and combine, into one signal, a plurality of signals received by the plurality of antennas. It may be understood that, in some embodiments, a plurality of antennas in one wireless communication module each receive one signal of a same transmitted message, a plurality of signals received by the plurality of antennas have same signal content, and degrees at which the plurality of signals are interfered with may be different due to different locations of the plurality of antennas.

In some embodiments, a signal combination processing process for combining a plurality of signals into one signal in this application may include: separately performing channel estimation on signals received on a plurality of scheduled antennas in a wireless communication module, to obtain a plurality of channel estimation results; separately obtaining a plurality of pieces of noise estimation or a plurality of signal-to-noise ratios from the plurality of channel estimation results; calculating a plurality of weight values based on the plurality of pieces of noise estimation or the plurality of signal-to-noise ratios, where a weight value of a signal corresponding to relatively large noise estimation or a relatively small signal-to-noise ratio is relatively small among the plurality of weight values; and performing, in subsequent processing based on corresponding weight values, weighted combination on signals of the plurality of signals that pass through a channel, to obtain one signal (namely, one downlink signal obtained through combination). In this way, a weight value of a signal corresponding to relatively large noise estimation or a relatively small signal-to-noise ratio is relatively small among the plurality of weight values, and therefore a signal-to-noise ratio of a signal finally obtained through combination is relatively large. In addition, a manner of combining a plurality of pieces of data may be another implementable manner. This is not specifically limited in this application.

In some embodiments, antennas used in a diversity solution in this application may be fastened in a same physical module, or may be antennas separated in a same area.

It may be understood that one wireless communication module in the electronic device generally includes a plurality of fastened antennas, and these antennas may generally operate as receive antennas. In a special scenario in which one wireless communication module is in a low-speed state or an idle state, the electronic device may schedule only a part of receive antennas in the wireless communication module. For example, when a downlink requirement of the electronic device is relatively low, to optimize power consumption, the electronic device may schedule, in a low-speed state or an idle state, only a part of receive antennas in one wireless communication module to operate. In this case, to optimize interference, the electronic device may select an antenna from remaining unused antennas in the wireless communication module as a newly scheduled receive antenna.

In this application, the newly scheduled receive antenna in the electronic device may be referred to as a receive diversity antenna, that is, the electronic device may forcibly add the receive diversity antenna. Specifically, in this application, adding a scheduled receive antenna to the wireless communication module means scheduling an existing but unused receive antenna without changing a hardware structure of the wireless communication module.

In this way, in this application, a spatial division manner may be used. For one of the wireless communication modules in the electronic device, a quantity of scheduled receive antennas is increased in space, that is, the receive diversity antenna is added, thereby improving communication quality of the communication module. In addition, a problem that exists in the foregoing several conventional technical means is avoided.

In some embodiments, the electronic device applicable to this application may be various electronic devices that have a plurality of communication modules, for example, devices such as a mobile phone, a computer, a laptop computer, a tablet computer, a television, a display device, an outdoor display screen, and an in-vehicle terminal.

In an embodiment, the communication method provided in this application may be applied to a scenario in which two or more wireless communication modules in an electronic device all operate and coexist interference exists. For example, each wireless communication module may be but is not limited a Wi-Fi communication module, a cellular network communication module, and a Bluetooth (Bluetooth) communication module.

It may be understood that each wireless communication module may include one or more antennas. For example, in the electronic device, especially a high-end device, the Wi-Fi module and the cellular network module each may include a plurality of antennas. In addition, the Bluetooth communication module may include one antenna.

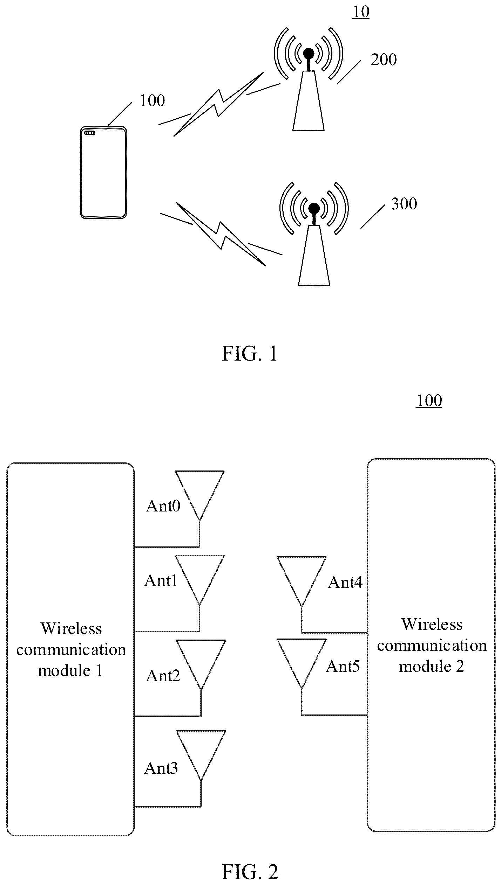

FIG. 1 is a schematic diagram of a system architecture to which a communication method is applied according to this application. The system architecture includes an electronic device 100, a network node 200, and a network node 300.

The electronic device 100 may separately communicate with the network node 200 and the network node 300. For example, when the electronic device 100 includes a wireless communication module 1 and a wireless communication module 2, the electronic device 100 may communicate with the network node 200 by using the wireless communication module 1 and communicate with the network node 2 by using the wireless communication module 2.

It may be understood that the wireless communication module 1 and the wireless communication module 2 in the electronic device 100 may include at least one of the following: a cellular network module, a Wi-Fi module, and a Bluetooth module.

In some embodiments, the network node 200 and the network node 300 may be but are not limited to a device such as a base station, a router, a gateway, and an access station. For example, the wireless communication module 1 is a cellular network module, the wireless communication module 2 is a Wi-Fi module, and the network node 200 and the network node 300 are respectively a base station and a router. Both the wireless communication module 1 and the wireless communication module 2 are cellular network modules, and the network node 200 and the network node 300 may be base stations of different operators.

In some embodiments, the electronic device 100 may receive a downlink signal from the base station 200 by using the wireless communication module 1, and send uplink data to the mobile station router 300 by using the wireless communication module 2. In this case, transmission of an antenna in the wireless communication module 2 may cause adjacent-channel interference or harmonic interference to receiving of an antenna in the wireless communication module 1.

Next, an application scenario in which the electronic device performs communication is described with reference to types of the wireless communication module 1 and the wireless communication module 2 shown in Table 1.

**Table 1:**

| Application scenario | Wireless communication module 1 | Wireless communication module 2 |
|---|---|---|
| Application scenario (1) | Cellular network module | Wi-Fi module |
| Application scenario (2) | Cellular network module | Bluetooth module |
| Application scenario (3) | Cellular network module | Cellular network module |
| Application scenario (4) | Wi-Fi module | Bluetooth module |

For example, the application scenario (1) may include scenarios such as Wi-Fi access and a cellular network call, Wi-Fi hotspot sharing and cellular network running data services, distributed communication, and multi-network collaboration.

For example, the application scenario (2) may include scenarios such as cellular network access and Bluetooth data transmission, a cellular network call and Bluetooth data transmission, distributed communication, and multi-network collaboration

For example, the application scenario (3) may include scenarios such as one cellular network for network access and the other cellular network for a call, the two cellular networks for separate calls, distributed communication, and multi-network collaboration. In this case, the electronic device 100 may support dual SIM dual standby, for example, two subscriber identity module (subscriber identity module, SIM) cards of different operators are mounted, to support the electronic device 100 to run two cellular network modules.

For example, the application scenario (4) may include scenarios such as Wi-Fi access and Bluetooth data transmission, distributed communication, and multi-network collaboration.

In some embodiments, in the application scenarios (1), (2), and (4), the wireless communication module 1 and the wireless communication module 2 each have an independent antenna system. In the application scenario (3), the wireless communication module 1 and the wireless communication module 2 may share a group of antenna systems. For example, the two wireless communication modules each lock different antennas in a same antenna system.

The following describes coexistence interference between two communication modules that both operate in the electronic device.

In some embodiments, a plurality of coexistence frequency bands may be preset in this application. Each coexistence frequency band includes two frequency bands between which interference exists, and a coexistence frequency band in this application may also be referred to as a coexistence parameter. Specifically, a range of one frequency band in some coexistence frequency bands is close to or adjacent to that of the other frequency band, that is, adjacent-channel interference exists between the two frequency bands in these coexistence frequency bands. A range of a harmonic of one frequency band in some other coexistence frequency bands is close to or adjacent to that of the other frequency band, that is, adjacent-channel interference exists between the two frequency bands in these coexistence frequency bands.

It may be understood that a manner of detecting that two wireless communication modules have operating frequency bands whose ranges are close to or adjacent to each other, or that a frequency band of a harmonic generated by one wireless communication module is close to or adjacent to an operating frequency band of the other wireless communication module includes: determining whether the operating frequency bands of the two wireless communication modules both fall within one preset coexistence frequency band, that is, whether the operating frequency bands of the two wireless communication modules are separately two frequency bands in the coexistence frequency band. In this case, each coexistence frequency band may be used to indicate a coexistence scenario in which two wireless communication modules both operate and coexistence interference exists. That is, when the operating frequency band of the wireless communication module 1 and the operating frequency band of the wireless communication module 2 in the electronic device 100 both fall within a specific coexistence frequency band, it indicates that the two modules are in a coexistence scenario in which coexistence interference exists. For example, the operating frequency band of the wireless communication module 1 is 2496 MHz~2546 MHz. The operating frequency band of the wireless communication module 2 is 2447 MHz~2482 MHz. If a coexistence frequency band includes a frequency band 2496 MHz~2546 MHz and a frequency band 2447 MHz~2482 MHz, it indicates that the operating frequency band of the wireless communication module 1 and the operating frequency band of the wireless communication module 2 belong to the coexistence frequency band, and coexistence interference exists between the two modules.

**In** some embodiments, in this application, if a difference between endpoint values of two frequency bands is less than or equal to a preset difference, the two frequency bands may be used as one coexistence frequency band. A value of the preset difference may be an empirical value or an experimental value. This is not specifically limited in this application.

As an example, when a difference between a maximum value of a range of one frequency band and a minimum value of a range of the other frequency band is less than or equal to a preset difference, the two frequency bands may constitute one coexistence frequency band corresponding to adjacent-channel interference. For example, that the preset difference is 300 MHz is used as an example. A frequency band 2496 MHz~2546 MHz and a frequency band 2447 MHz~2482 MHz may constitute one coexistence frequency band corresponding to adjacent-channel interference, where a difference between a maximum value 2546 MHz of the former and a minimum value 2447 MHz of the latter is 99 MHz, and the difference is less than the preset difference.

As an example, when a difference between an integer multiple of a maximum value of a range of one frequency band and a minimum value of a range of the other frequency band is less than or equal to a preset difference, the two frequency bands may constitute one coexistence frequency band corresponding to harmonic interference. For example, that the preset difference is 300 MHz is used as an example. A frequency band 2496 MHz~2546 MHz and a frequency band 4800 MHz-4900 MHz may constitute one coexistence frequency band corresponding to harmonic interference, where a difference between twice a maximum value 2546 MHz of the former and a minimum value 4800 MHz of the latter is 292 MHz, and the difference is less than the preset difference.

It may be understood that whether coexistence interference between the wireless communication module 1 and the wireless communication module 2 is harmonic interference or adjacent-channel interference depends on the operating frequency bands of the two modules. For example, when the two modules separately operate on a second harmonic of a 2.4G frequency band of a Wi-Fi network and N79 of a 5G cellular network, coexistence interference between the two wireless communication modules is harmonic interference. For another example, when the two modules separately operate on a 2.4G frequency band of a Wi-Fi network and N41 of a cellular network, coexistence interference between the two wireless communication modules is adjacent-channel interference.

In some embodiments, the wireless communication module 1 and the wireless communication module 2 may have different antenna combinations. The two wireless communication modules may use a plurality of operating frequency band combinations in case of a same antenna combination, that is, a same antenna combination between the two wireless communication modules may correspond to a plurality of coexistence frequency bands.

It may be understood that a wireless communication module may use a same antenna at some operating frequencies, for example, a cellular network module may use a same antenna on B40, B41, and N41 frequency bands. In addition, an antenna used by a wireless communication module on some operating frequency bands is different from an antenna used at some other operating frequencies. For example, an antenna used by the cellular network module on an N41 frequency band is different from an antenna used on an N79 frequency band.

In some embodiments, to facilitate management of a preset coexistence frequency band, a plurality of coexistence frequency bands on which a same antenna combination is used between two wireless communication modules may be classified into a same type. A type of the coexistence frequency band may also be referred to as a level. In this case, one level includes a plurality of coexistence frequency bands.

In some embodiments, in this application, coexistence frequency bands separately formed by B40, B41, and N41 frequency bands of the cellular network module and the 2.4G frequency band of the Wi-Fi module may be used as a same type of coexistence frequency band, which may be referred to as a coexistence frequency band of a 2.4G adjacent-channel type.

Next, refer to Table 2, which shows examples of a plurality of coexistence frequency bands of a 2.4G adjacent-channel type.

**Table 2:**

| A plurality of coexistence frequency bands of a 2.4G adjacent-channel type | | |
|---|---|---|
| Coexistence frequency band | Wireless communication module 1 | Wireless communication module 2 |
| Coexistence frequency band 1 | B40 high channel | WLAN low channel [CH1~CH5] |
| | [39360~39649] [2371 MHz~2400 MHz] | [2402 MHz~2432 MHz] |
| Coexistence frequency band 2 | B41 low channel | WLAN high channel [CH8~CH13] |
| | [39650~40150] [2496 MHz~2546 MHz] | 2447 MHz~2482 MHz |
| Coexistence frequency band 3 | N41 low channel | WLAN high channel [CH8~CH13] |
| | [499200~51300] [2496 MHz~2565 MHz] | 2447 MHz~2482 MHz |

The coexistence frequency bands 1~3 shown in Table 2 may respectively indicate coexistence scenarios 1~3, namely, three scenarios in which coexistence interference exists.

In some embodiments, each coexistence frequency band shown in Table 2 includes the operating frequency band and a corresponding channel number of the wireless communication module 1, and one operating frequency band and a corresponding channel number of the wireless communication module 2. Generally, an operating frequency band corresponding to a channel is fixed.

The coexistence frequency band 2 in Table 2 indicates that the operating frequency band of the wireless communication module 1 is 2496 MHz~2546 MHz, and a corresponding channel (channel) is a B41 high channel of 39650~40150. The coexistence frequency band 2 indicates that the operating frequency band of the wireless communication module 2 is 2447 MHz~2482 MHz, and a corresponding channel is a wireless local area network (wireless local area network, WLAN) high channel of CH8~CH13. For example, in the coexistence scenario 2 indicated by the coexistence frequency band 2, sending of an uplink signal by the wireless communication module 1 within the B41 frequency band causes adjacent-channel interference to receiving of a downlink signal by the wireless communication module 2 within the 2.4G frequency band of Wi-Fi.

Similarly, for related descriptions of the coexistence frequency band 1 and the coexistence frequency band 3 in Table 3, refer to related descriptions of the foregoing coexistence frequency band 2. Details are not described again.

In some embodiments, the coexistence scenario 2 in which 2.4G Wi-Fi coexists with B41 of the cellular network is used as an example to describe the two wireless communication modules in the electronic device and a communication method thereof.

The following describes antenna structures in the two wireless communication modules in the electronic device. FIG. 2 is a schematic diagram of antenna structures of a wireless communication module 1 and a wireless communication module 2 according to an embodiment of this application.

In FIG. 2, the wireless communication module 1 is a long term evolution (long term evolution, LTE) module, for example, operates on LTE B41, and an antenna specification thereof is 1TX/4RX. In this case, the wireless communication module 1 includes four antennas Ant0~Ant3. All the four antennas may operate as RX, and one of the antennas may be scheduled to operate as TX. It may be understood that LTE is of a 4G network standard and is a cellular network.

The wireless communication module 2 in FIG. 2 supports Wi-Fi on a 2.4G frequency band, and an antenna specification thereof is 2TRX. The wireless communication module 2 includes two antennas Ant4 and Ant5, and the two antennas may operate as RX or TX.

In some embodiments, scheduling of TX from the antennas Ant0~Ant3 in the wireless communication module 1 may be determined based on received signal strength of the four antennas, for example, reference signal received powers (reference signal receiving power, RSRP) are separately obtained by polling the four antennas, to select an antenna with a maximum RSRP to operate as TX.

It may be understood that, generally, a quantity of RXs of downlink service data of the cellular network module is determined by a downlink requirement of a user. When the wireless communication module 1 is in an idle state or a low-speed state, if power consumption optimization is considered, only one receive antenna may be scheduled.

In some embodiments, when the wireless communication module 1 is LTE and is in an idle state or a low-speed state, to optimize power consumption, only one receive antenna with best performance may be scheduled to receive downlink data. For example, the electronic device may schedule one antenna from the antennas Ant0~Ant3 as RX, that is, select one RX from 4RX for receiving. Specifically, scheduling of RX from the antennas Ant0~Ant3 may be determined based on the received signal strength of the four antennas. For example, the RSRPs are separately obtained by polling the four antennas, and an antenna with a maximum RSRP is selected to operate as RX, that is, an antenna with best performance is scheduled to operate as RX.

In this case, when the wireless communication module 1 is LTE and is in an idle state or a low-speed state, if coexistence interference exists between the wireless communication module 1 and the wireless communication module 2, a received signal of one scheduled receive antenna in the wireless communication module 1 may be interfered with. As a result, a signal-to-noise ratio of the received signal is deteriorated, which affects a call completion rate when the wireless communication module 1 receives a call request.

In addition, in some other embodiments, in this application, a received signal strength value and an SNR of each antenna in the wireless communication module may be obtained through polling, to schedule an antenna with optimal received signal strength and an optimal SNR to operate. For example, the electronic device 100 may compare the SNRs and the RSRPs of the antennas Ant0~Ant3 shown in FIG. 2 to select an antenna with an optimal RSRP and an optimal SNR to operate, for example, select an antenna with a maximum RSRP and a relatively large SNR to operate.

In some embodiments, an RSRP value range and an SNR value range may be preset in this application. When both an RSRP and an SNR of an antenna meet corresponding value ranges, the antenna is scheduled to operate. The RSRP value range and the SNR value range may be set based on an actual requirement, and a specific value is not limited.

For ease of description, in the following in this embodiment of this application, an example in which the electronic device 100 performs antenna scheduling on the wireless communication module based on a magnitude of a received signal strength value of each antenna is mainly used for description.

The RSRP is a received signal strength indicator, which indicates a received average power of a specific cellular network cell. If a value of the RSRP is very low, it indicates that received signal strength is very weak. In this case, user experience is very poor. For example, a value range of the RSRP is -140~-40, and a unit is decibel relative to one milliwatt (decibel relative to one milliwatt, dBm). -140 dBm indicates a weakest signal, and -40 dBm indicates a strongest signal.

The SNR is a ratio of strength of a received wanted signal to strength of a received interference signal (noise), and reflects link quality of a current channel, that is, may reflect a degree at which the current channel is interfered with. For example, a value range of the SNR is - 20~50, and a unit is decibels (dB). A larger value indicates a lower degree at which the current channel is interfered with.

In some embodiments, the communication method provided in this application may be applied to a scenario in which an antenna in the wireless communication module 1 in the electronic device 100 performs receiving and an antenna in the wireless communication module 2 performs sending. In this case, transmission of the wireless communication module 2 may cause coexistence interference to receiving of the wireless communication module 1.

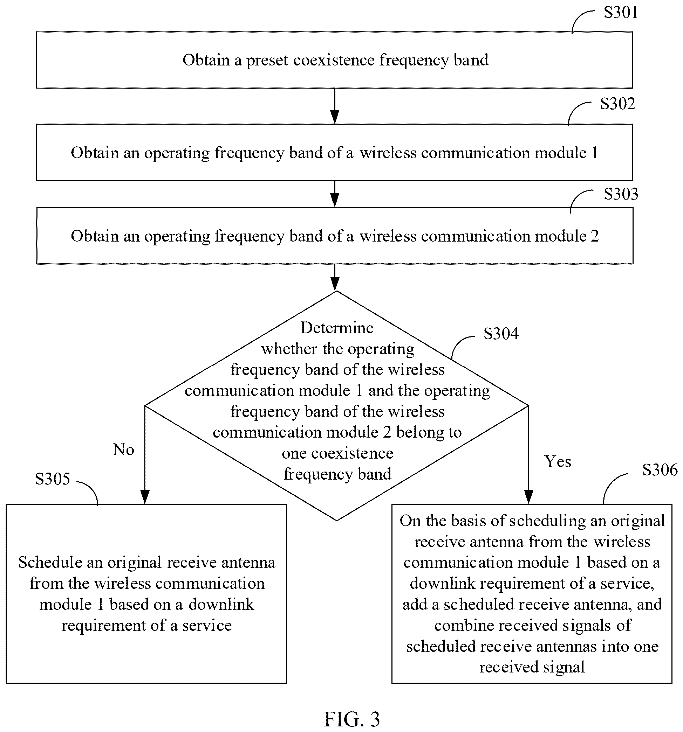

Next, refer to FIG. 3, which is a schematic flowchart of a communication method according to an embodiment of this application. The method is applied to the system architecture 10 shown in FIG. 1, that is, the communication method may be performed by the electronic device 100 shown in FIG. 1. Specifically, as shown in FIG. 3, the method includes the following steps.

S301: The electronic device 100 obtains a preset coexistence frequency band.

In some embodiments, the foregoing preset coexistence frequency band may be prestored in the electronic device 100. In addition, the preset coexistence frequency band may include a plurality of types of coexistence frequency bands, for example, the coexistence frequency band of the 2.4G adjacent-channel type shown in Table 2 above.

S302: The electronic device 100 obtains an operating frequency band of the wireless communication module 1.

In some embodiments, in a scenario in which the wireless communication module 1 of the electronic device 100 is in a receive state and the wireless communication module 2 needs to enter a transmit state, sending of an uplink signal by an antenna in the wireless communication module 2 may interfere with receiving of a downlink signal by an antenna in the wireless communication module 1.

For example, the wireless communication module 1 is a cellular network module and the operating frequency band thereof is 2496 MHz~2546 MHz, that is, the module 1 operates within a B41 low channel 39650~40150 of a cellular network.

S303: The electronic device 100 obtains an operating frequency band of the wireless communication module 2.

In some other embodiments, in this application, S303 may be performed before S302, or S302 and S303 are simultaneously performed. This is not limited.

For example, the wireless communication module 2 is a Wi-Fi module and the operating frequency band thereof is 2447 MHz~2482 MHz, that is, the module 2 operates within a WLAN high channel CH8~CH13.

S304: The electronic device 100 determines whether the operating frequency band of the wireless communication module 1 and the operating frequency band of the wireless communication module 2 belong to one coexistence frequency band. If the operating frequency band of the wireless communication module 1 and the operating frequency band of the wireless communication module 2 do not belong to any coexistence frequency band, the method enters S305. On the contrary, if the two operating frequency bands belong to one coexistence frequency band, the method enters S306.

In some embodiments, the electronic device 100 may periodically determine whether the operating frequency bands of two wireless communication modules in the electronic device 100 meets any coexistence frequency band.

It may be understood whether the operating frequency band of the wireless communication module 1 and the operating frequency band of the wireless communication module 2 belong to one coexistence frequency band may be used as an interference condition. When the operating frequency band of the wireless communication module 1 and the operating frequency band of the wireless communication module 2 belong to any coexistence frequency band, and if the interference condition is met, it indicates that coexistence interference exists between the two modules. On the contrary, if the interference condition is not met, it indicates that no coexistence interference exists between the two modules.

As an example, when the operating frequency band of the wireless communication module 1 is a frequency band 2496 MHz~2546 MHz of the B41 low channel 39650~40150 of the cellular network and the operating frequency band of the wireless communication module 2 indicates a frequency band 2447 MHz~2482 MHz of the WLAN high channel CH8~CH13, the electronic device 100 determines that the two operating frequency bands belong to the coexistence frequency band 2 in Table 2, that is, the two wireless communication modules operate in the coexistence scenario 2 corresponding to the coexistence frequency band 2. In this case, adjacent-channel interference exists between the two wireless communication modules.

S305: The electronic device 100 schedules an original receive antenna from the wireless communication module 1 based on a downlink requirement of a service.

For ease of description, in this application, a procedure in which no additional receive antenna is added is referred to as an original scheduling algorithm.

In some embodiments, the original scheduling algorithm may perform antenna scheduling on the wireless communication module based on the downlink requirement of the service. The algorithm may include: determining a quantity of receive antennas of a downlink signal service based on a downlink requirement of a user in the wireless communication module. For example, an original scheduling algorithm of the cellular network module may include: when the cellular network module is in an idle state or a low-speed state, to optimize power consumption, scheduling only one receive antenna.

In some embodiments, in this application, a receive antenna scheduled from a wireless communication module based on the original scheduling algorithm may be referred to as an initial receive antenna, to distinguish from a receive antenna scheduled when a receive diversity is added.

It may be understood that the electronic device 100 schedules a receive antenna from the wireless communication module 1 to receive a downlink signal. For example, the scheduled receive antenna in the wireless communication module 1 may be used to receive a downlink signal from the network node 200 shown in FIG. 1.

In some embodiments, when the wireless communication module 1 and the wireless communication module in the electronic device 100 are in a non-coexistence scenario, and the wireless communication module 1 is a cellular network module and is in an idle state or a low-speed state, to optimize power consumption, only one receive antenna in the wireless communication module 1 may be scheduled, that is, one antenna is scheduled as an initial receive antenna.

Referring to FIG. 2, in the coexistence scenario 2, the electronic device 100 may schedule, as an original receive antenna, an antenna with maximum received signal strength from the wireless communication module 1 based on the original scheduling algorithm, or may schedule, as an original receive antenna, an antenna with optimal received signal strength and an optimal signal-to-noise ratio, for example, may schedule the antenna Ant0 shown in FIG. 2 as an original receive antenna of the wireless communication module 1.

In some embodiments, if the operating frequency band of the wireless communication module 1 and the operating frequency band of the wireless communication module 2 change from belonging to a specific coexistence frequency band to not belonging to any coexistence frequency band, the electronic device 100 exits an receive antenna addition procedure and enters the original scheduling algorithm, and disables a scheduled receive antenna added based on the receive antenna addition procedure.

In some embodiments, if the operating frequency band of the wireless communication module 1 and the operating frequency band of the wireless communication module 2 continuously do not belong to any coexistence frequency band, the electronic device 100 may continuously operate by using the original scheduling algorithm.

In some embodiments, each wireless communication module in the electronic device 100 includes a modem (Modem), configured to: collect signal received strength of each antenna in the module, and perform antenna scheduling based on received signal strength value of each antenna. For example, the wireless communication module 1 may select an original receive antenna based on a received signal strength value of each antenna by using a Modem in the wireless communication module 1, for example, select an antenna with a maximum received signal strength value as an original receive antenna.

S306: On the basis of scheduling an original receive antenna from the wireless communication module 1 based on a downlink requirement of a service, the electronic device 100 adds a scheduled receive antenna, and combines received signals of scheduled receive antennas into one received signal.

In some embodiments, downlink signals received by a plurality of receive antennas in the wireless communication module 1 are the same, and a plurality of same downlink signals are combined into one downlink signal. In this case, the downlink signals received by the antennas in the wireless communication module 1 are signals of a same transmitted message.

In some embodiments, the foregoing receive antenna addition procedure is as follows: For a wireless communication module, on the basis of an original receive antenna scheduled by using the original scheduling algorithm, scheduling of one or more receive antennas is added, to increase a total quantity of receive antennas for receiving a downlink signal in the wireless communication module.

For example, if the operating frequency bands of the wireless communication module 1 and the wireless communication module 2 meets the coexistence frequency band 2 shown in Table 2, the two modules are in the coexistence scenario 2.

In some implementations, when the operating frequency band of the wireless communication module 1 and the operating frequency band of the wireless communication module 2 change from not belonging to any coexistence frequency band to belonging to a specific coexistence frequency band, the electronic device 100 may 100 exit (or disable) the original scheduling algorithm and enter the receive antenna addition procedure, to increase a total quantity of scheduled receive antennas in the wireless communication module 1 by adding a scheduled receive antenna.

In some embodiments, when the operating frequency band of the wireless communication module 1 and the operating frequency band of the wireless communication module 2 change from belonging to another coexistence frequency band to belonging to another coexistence frequency band, or continuously belong to a same coexistence frequency band, the electronic device 100 continuously executes the receive antenna addition procedure, to increase a total quantity of scheduled receive antennas in the wireless communication module 1 by adding a scheduled receive antenna.

In addition, a quantity of scheduled receive antennas added by the electronic device 100 to the wireless communication module 1 is limited to a total quantity of antennas in the wireless module. In this case, the quantity of scheduled receive antennas added by the electronic device 100 to the wireless communication module 1 is at least 1, and is at most a quantity of other receive antennas other than the original receive antenna in the module 1.

In some embodiments, when adding a plurality of scheduled receive antennas, the electronic device 100 may add scheduling of the plurality of receive antennas at one time, or may add the scheduled receive antennas one by one.

In some embodiments, the electronic device 100 may determine a to-be-added scheduled receive antenna based on a received signal strength value of each antenna in the wireless communication module 1, for example, select one or more antennas with a maximum received signal strength value as a newly scheduled receive antenna.

In some embodiments, the electronic device 100 first selects, based on the received signal strength value of each antenna in the wireless communication module 1, an antenna with a maximum received signal strength value as an original receive antenna, and then selects, from remaining antennas, one or more antennas with a maximum received signal strength value as a to-be-added scheduled receive antenna. For example, referring to the antenna specification shown in FIG. 2, the electronic device 100 may select the antenna Ant0 as an original receive antenna, and then select the antenna Ant2 as a to-be-added scheduled receive antenna. That is, a sequence in which the electronic device 100 adds scheduling of a receive antenna is a sequence of optimal receive performance of remaining receive antennas.

It may be understood that the wireless communication module 1 is a cellular network module, and the received signal strength value of the antenna in the module may be an RSRP. The wireless communication module 1 is a Wi-Fi module, and the received signal strength value of the antenna in the module may be a received signal strength indicator (received signal strength indicator, RSSI).

In a wireless network, the RSSI represents signal strength, attenuates as a distance increases, and is generally a negative value. If the value is closer to zero, it indicates that signal strength is higher. For example, a value range of the RSSI is -140~-10, and a unit is dBm.

In some embodiments, the electronic device 100 may select the original receive antenna and the to-be-added scheduled receive antenna based on the received signal strength value and the signal-to-noise ratio of each antenna in the wireless communication module 1.

It may be understood that, in this application, a plurality of scheduled antennas in the wireless communication module 1 may receive a plurality of same downlink signals, and the plurality of downlink signals are combined into one downlink signal, thereby increasing a signal-to-noise ratio of one finally obtained downlink signal, and improving communication quality of the module.

It may be understood that a larger quantity of receive antennas for receiving a downlink signal in the wireless communication module 1 indicates a higher signal-to-noise ratio of the received downlink signal and better communication quality. However, a larger quantity of operating receive antennas indicates larger power consumption. In this application, to avoid strong interference between the two wireless communication modules, specific power consumption may be sacrificed, and communication quality of one of the wireless communication modules is improved by adding scheduling of a receive antenna in the wireless communication module.

In this way, in this application, when receiving of one wireless communication module in the electronic device is interfered with by the other wireless communication module, a scheduled receive antenna may be added to the wireless communication module based on the receive antenna addition procedure. In this way, compared with the original receive antenna scheduled from one of the wireless communication modules based on the original scheduling algorithm, in this application, a scheduled receive antenna is forcibly added to the wireless communication module, thereby increasing a signal-to-noise ratio of a downlink signal received by the wireless communication module. Therefore, an impact of coexistence interference between the two wireless communication modules in the electronic device on communication quality in a receiving process of one of the two wireless communication modules is reduced. For example, when the wireless communication module 1 is an LTE module and is in an idle state or a low-speed state, an SNR of a received signal is increased by increasing a scheduled receive antenna in the wireless communication module 1. This optimizes, to a specific degree, a problem that a call completion rate decreases when the wireless communication module 1 receives a call request.

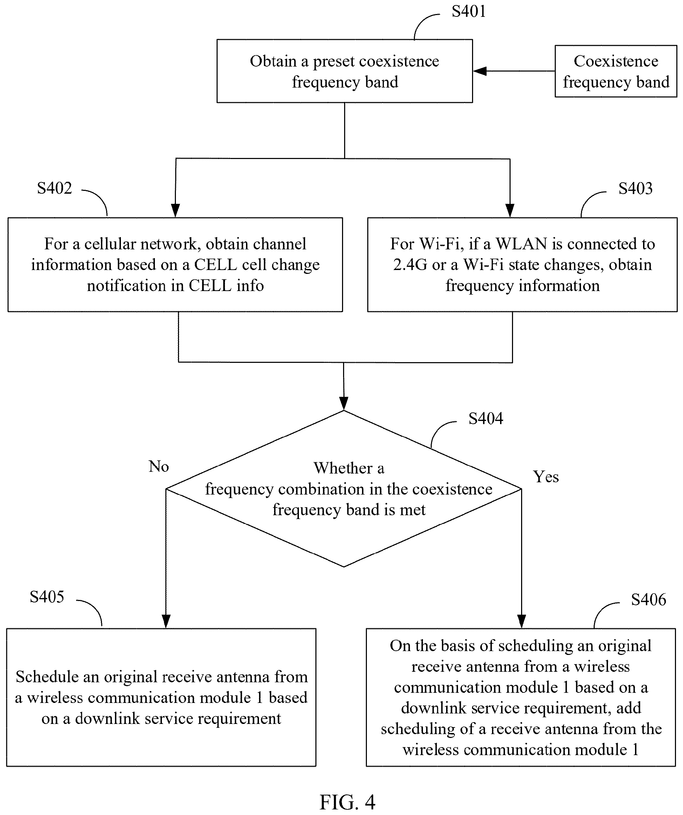

With reference to FIG. 4, a procedure in which the method shown in FIG. 3 is applied to the coexistence scenario 2 existing when a 2.4G frequency band of Wi-Fi and B41 of a cellular network both operate is described. Specifically, the method shown in FIG. 4 includes the following steps.

S401: The electronic device 100 obtains a preset coexistence frequency band. Therefore, the coexistence frequency band is initialized.

In some embodiments, the electronic device 100 may receive a coexistence frequency band input by a user, or obtain the coexistence frequency band from another device such as a server. Therefore, that the electronic device 100 obtains the coexistence frequency band means that the electronic device 100 completes initialization of the coexistence frequency band.

S402: For a cellular network, the electronic device 100 obtains channel information based on a CELL cell change notification in CELL info, to obtain a corresponding operating frequency band.

S403: For Wi-Fi, if a WLAN is connected to a 2.4G or a Wi-Fi state changes, the electronic device 100 obtains frequency information to obtain a corresponding operating frequency band.

A sequence of performing S402 and S403 is not specifically limited. For example, the two steps may be performed simultaneously.

S404: The electronic device 100 determines whether a frequency combination in the coexistence frequency band is met. For example, the electronic device 100 may determine whether the channel information of the cellular network and the frequency information of Wi-Fi meet the frequency combination in the coexistence frequency band.

S405: The electronic device 100 schedules an original receive antenna from the wireless communication module 1 based on a downlink service requirement.

S406: On the basis of scheduling an original receive antenna from the wireless communication module 1 based on a downlink service requirement, the electronic device 100 adds scheduling of a receive antenna from the wireless communication module 1.

For specific descriptions of S401~S406, refer to related descriptions in S301-S306 in the example shown in FIG. 3. Details are not described herein again.

It may be understood that the procedure shown in FIG. 4 mainly describes the following: In the coexistence scenario 2 existing when the 2.4G frequency band of Wi-Fi and B41 of LTE both operate, when the LTE module is in an idle state or a low-speed state, one or more receive antennas in the wireless communication module 1 are forcibly added, to increase a signal-to-noise ratio of a received signal of the wireless communication module 1. Therefore, downlink communication quality of the LTE module is improved, and a call completion rate thereof is improved.

In some embodiments, the wireless communication module 1 includes two antennas and an antenna specification thereof is 1TX/2RX. In addition, the wireless communication module 1 is a cellular network module, and the wireless communication module 2 is a Wi-Fi module. In this case, when the wireless communication module 1 is in an idle state or a low-speed state, the wireless communication module 1 may schedule only one receive antenna. If sending of uplink data by the wireless communication module 2 generate coexistence interference on receiving of the wireless communication module 1, a signal-to-noise ratio of a received signal of the receive antenna of the wireless communication module 1 is relatively poor. In this case, in this application, another receive antenna in the wireless communication module 1 may be forcibly added, to increase the signal-to-noise ratio of the received signal of the wireless communication module 1, so as to improve a call completion rate when the wireless communication module 1 receives a call request.

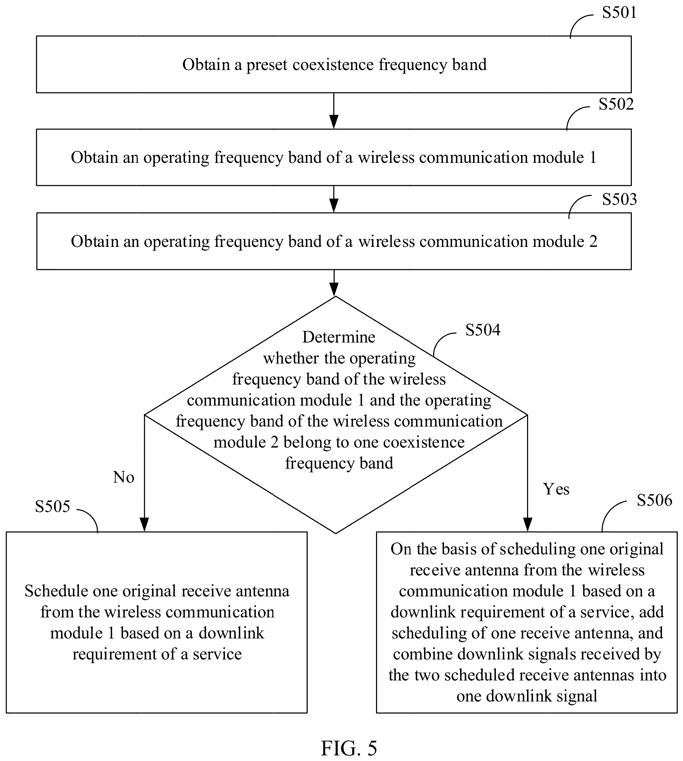

With reference to FIG. 5, a process of adding a scheduled receive antenna when the method shown in FIG. 3 is applied to a scenario in which the wireless communication module 1 includes two antennas is described. The procedure shown in FIG. 5 is still executed by the electronic device 100, and includes the following steps.

S501: The electronic device 100 obtains a preset coexistence frequency band.

S502: The electronic device 100 obtains an operating frequency band of the wireless communication module 1.

S503: The electronic device 100 obtains an operating frequency band of the wireless communication module 2.

S504: The electronic device 100 determines whether the operating frequency band of the wireless communication module 1 and the operating frequency band of the wireless communication module 2 belong to one coexistence frequency band. If the operating frequency band of the wireless communication module 1 and the operating frequency band of the wireless communication module 2 do not belong to any coexistence frequency band, the method enters S505. On the contrary, if the two operating frequency bands belong to one coexistence frequency band, the method enters S506.

S505: When the operating frequency band of the wireless communication module 1 and the operating frequency band of the wireless communication module 2 do not belong to any coexistence frequency band, the electronic device 100 schedules one original receive antenna from the wireless communication module 1 based on a downlink requirement of a service. For example, when the wireless communication module 1 is a cellular network module and is in an idle state or a low-speed state, the electronic device 100 schedules, as an original receive antenna based on an original scheduling algorithm, one receive antenna with optimal performance from two receive antennas in the wireless communication module 1.

S506: When the operating frequency band of the wireless communication module 1 and the operating frequency band of the wireless communication module 2 belong to one coexistence frequency band, on the basis of scheduling one original receive antenna from the wireless communication module 1 based on a downlink requirement of a service, the electronic device 100 adds scheduling of one receive antenna, and combines downlink signals received by the two scheduled receive antennas into one downlink signal.

S505 and S506 are parallel steps.

Similarly, for specific descriptions of S501~S506 shown in FIG. 5, refer to related descriptions of S301~S306 shown in FIG. 3. Details are not described herein again.

In some embodiments, in this application, a start mechanism for enabling a receive antenna addition procedure may be added, for example, it is determined whether the wireless communication module 1 in the electronic device 100 meets a condition of being interfered with. On the contrary, if the condition of being interfered with is not met, the receive antenna addition procedure does not need to be started. For example, the foregoing condition of being interfered with may include: Received signal strength of an antenna in the wireless communication module 1 is relatively weak and interference exists, and an unused receive antenna exists in the wireless communication module 1.

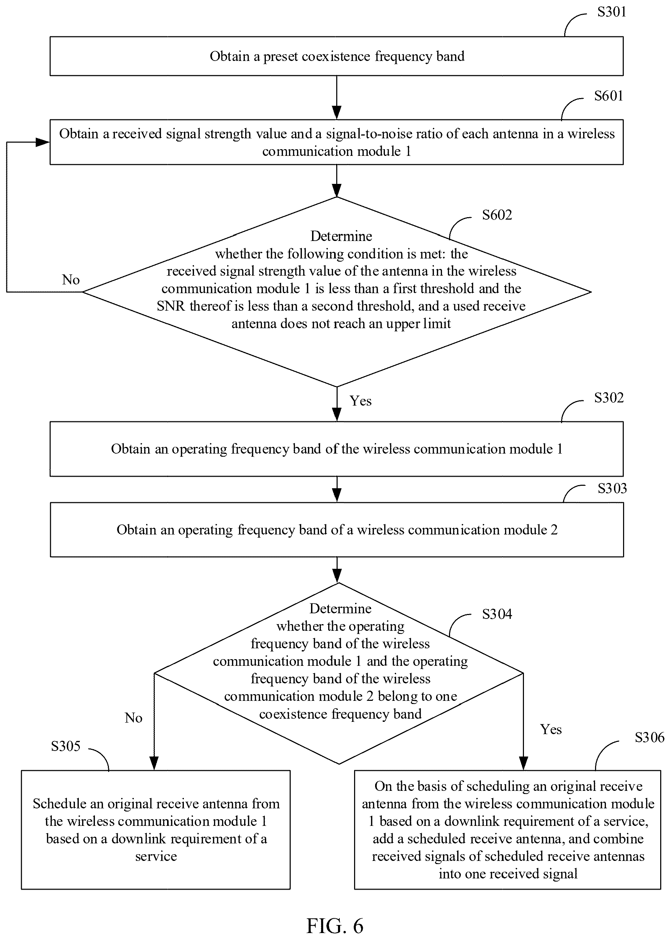

With reference to FIG. 6, the start mechanism for entering the receive antenna addition procedure in the method shown in FIG. 3 is described. As shown in FIG. 6, before S302 shown in FIG. 3, S601 and S602 are further included.

S601: The electronic device 100 obtains a received signal strength value and a signal-to-noise ratio of each antenna in the wireless communication module 1.

In some embodiments, the electronic device 100 may periodically monitor an antenna state of each antenna in the wireless communication module 1, and monitor the received signal strength value and the SNR of the antenna when the antenna is in a receive state.

In some other embodiments, the electronic device 100 does not need to additionally obtain state information of an antenna in the wireless communication module 1, and may directly monitor and obtain the received signal strength value and the SNR of the antenna. Details are not described again.

It may be understood that a state of an antenna is used to indicate whether the antenna operates as TX or RX. When the antenna receives data as RX, a received signal strength value and an SNR of the antenna may be obtained through detection.

For example, the wireless communication module 1 is a cellular network module, and the received signal strength value of the antenna is an RSRP. The wireless communication module 1 is a Wi-Fi module, and the received signal strength value of the antenna is an RSSI.

S602: The electronic device 100 determines whether the following condition is met: the received signal strength value of the antenna in the wireless communication module 1 is less than a first threshold and the SNR thereof is less than a second threshold, and a used receive antenna in the wireless communication module 1 does not reach an upper limit. If yes, the method enters S302. If no, the method continues to return to S601 to continue to monitor the receive state of the antenna in the current wireless communication module 1.

The foregoing condition of being interfered with may include: The received signal strength value of the antenna in the wireless communication module 1 is less than the first threshold and the SNR thereof is less than the second threshold, and the used receive antenna in the wireless communication module 1 does not reach the upper limit. If the used receive antenna in the wireless communication module 1 does not reach the upper limit, it indicates that an unused receive antenna currently exists in the wireless communication module 1.

For example, in the coexistence scenario 2 shown in Table 2, the wireless communication module 1 is a cellular network module and an antenna specification thereof is 1TX/4RX, that is, the wireless communication module 1 shown in FIG. 2 includes four receive antennas. In this case, in S602, the electronic device 100 may determine whether the following condition is met: An RSRP of one of currently used receive antennas in the wireless communication module 1 is less than the first threshold and an SNR thereof is less than the second threshold, and a quantity of currently used receive antennas does not exceed 4, where 4 is an upper limit of a quantity of receive antennas.

It may be understood that, if received signal strength of an antenna is less than the first threshold, it indicates the wireless communication module 1 currently has a weak signal; and if an SNR thereof is less than the second threshold, it indicates that a received signal of the wireless communication module 1 is currently interfered with. That is, that the received signal of the wireless communication module 1 is currently a weak signal and is interfered with means that current receiving of a downlink signal by the wireless communication module 1 may suffer from coexistence interference caused by sending of an uplink signal by the wireless communication module 2.

As an example, when the wireless communication module 1 is a cellular network module, received signal strength of each antenna is an RSRP, and the first threshold may be -110 dBm, that is, the RSSI of the antenna is less than -110 dBm. The second threshold may be 10, that is, the SNR of the antenna is less than 10 dB, but is not limited thereto.

In this case, only when it is determined that the wireless communication module 1 currently has a weak signal and is interfered with, and the receive antenna does not reach the upper limit, a coexistence scenario identification procedure and a receive antenna addition procedure are executed. This helps improve execution efficiency of antenna scheduling in the communication method.

In some embodiments, after the condition that is of being interfered with and that corresponds to the foregoing start mechanism is met and operating frequency bands of the two wireless communication modules are obtained, when monitoring that a state of one or two of the wireless communication modules changes, the electronic device 100 may obtain again the operating frequency bands of the two wireless communication modules.

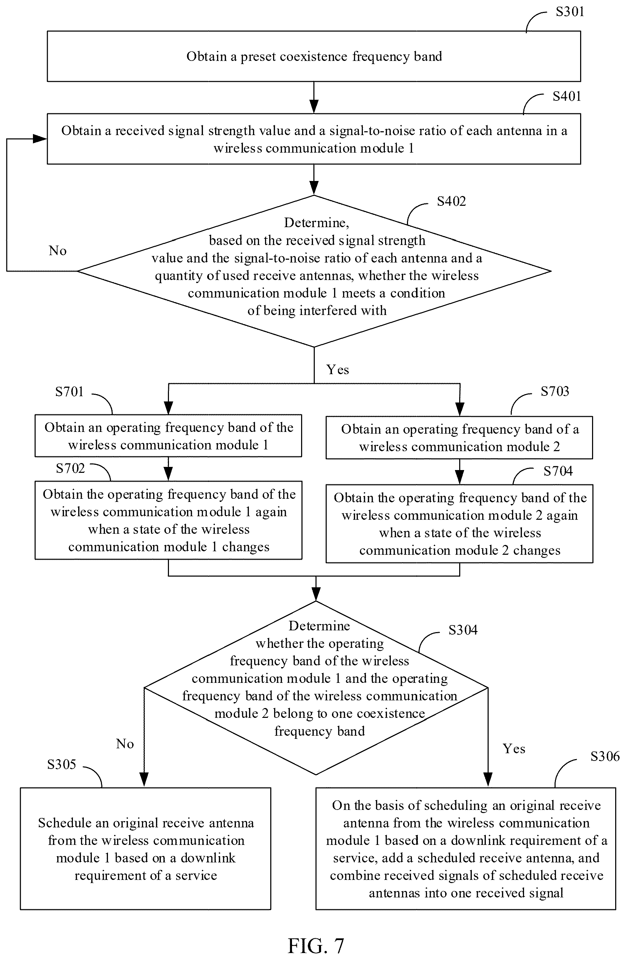

With reference to FIG. 7, an occasion for obtaining an operating frequency band of each wireless communication module by the electronic device in the method shown in FIG. 6 is described. For example, referring to the method shown in FIG. 7, the foregoing S302 may include S701 and S702, and S303 may include S703 and S704.

S701: The electronic device 100 obtains an operating frequency band of the wireless communication module 1.

It may be understood that when determining, by using S402, that the condition of being interfered with is met, the electronic device 100 may directly obtain the operating frequency band of the wireless communication module 1.

S702: The electronic device 100 obtains the operating frequency band of the wireless communication module 1 again when a state of the wireless communication module 1 changes.

In some embodiments, after determining, by using S402, that the condition of being interfered with is met, the electronic device 100 may monitor that the state of the wireless communication module 1 changes, for example, periodically perform monitoring, to determine whether the wireless communication module 1 changes. Setting of a period may be set based on an actual requirement. This is not specifically limited herein.

In some embodiments, when the wireless communication module 1 is a cellular network module and a cell changes, it indicates that the state of the wireless communication module 1 changes. It may be understood that, when the cell of the cellular network changes, for example, when cell handover occurs, a channel on which the wireless communication module 1 operates generally changes, and a corresponding operating frequency band changes.

Generally, the electronic device 100 monitors a neighboring cell after being connected to a serving cell. When it is found that the neighboring cell can stably provide better signal quality than the serving cell, the better cell is selected as the serving cell, that is, cell handover occurs.

In some embodiments, the electronic device 100 may obtain cell information (cell info), namely, information about a cell (namely, a serving cell) in which the electronic device 100 is currently located. The cell information generally includes a cell identity (cell ID), a channel (channel), a physical cell identifier (physical cell identifier, PCI), and the like.

As an example, the electronic device 100 may determine, by using a change of a cell ID or a PCI in current cell information, that a current cell changes. Further, when the cell of the electronic device 100 changes, channel information corresponding to the current cell is obtained, to obtain a corresponding operating frequency band.

S703: The electronic device 100 obtains an operating frequency band of the wireless communication module 2.

It may be understood that when determining, by using S402, that the condition of being interfered with is met, the electronic device 100 may directly obtain the operating frequency band of the wireless communication module 2.

S704: The electronic device 100 obtains the operating frequency band of the wireless communication module 2 again when a state of the wireless communication module 2 changes.

In some embodiments, after determining, by using S402, that the condition of being interfered with is met, the electronic device may monitor that the state of the wireless communication module 2 changes, for example, periodically perform monitoring, to determine whether the wireless communication module 2 changes. Setting of a period may be set based on an actual requirement. This is not specifically limited herein.

In some embodiments, when the wireless communication module 2 is a Wi-Fi module and a WLAN is connected to 2.4G or a state of Wi-Fi changes, the electronic device 100 may obtain the operating frequency band of the wireless communication module 2.

It may be understood that, when the WLAN of the Wi-Fi module is connected to 2.4G or the state of Wi-Fi changes, it indicates that the operating frequency band of the wireless communication module 2 changes. In this case, when the wireless communication module 2 is a Wi-Fi module, WLAN channel information of the wireless communication module 2 may be obtained, to learn of a corresponding operating frequency band. For example, the wireless communication module 2 operates within a frequency band range of [2447~2482], that is, operates on a WLAN high channel CH8~CH13.

As an example, when Wi-Fi is connected to 2.4G, it indicates that the wireless communication module 2 is connected to a channel CH1~CH5 or a channel CH8~CH13. When the state of Wi-Fi changes, it means that the wireless communication module 2 switches from the channel CH1~CH5 to the channel CH8~CH13 or from the channel CH8~CH13 to the channel CH1~CH5.

In some other embodiments, in this application, when detecting that a state of one of the wireless communication module 1 and the wireless communication module 2 changes, the electronic device 100 may obtain the operating frequency bands of the two modules again or obtain again only an operating frequency band of a module whose state changes.

A sequence of performing the foregoing S701 and S702 is not limited, a sequence of performing the foregoing S703 and S704 is not specifically limited, and may be any implementable sequence.

In this way, in this application, a state change of the wireless communication module in the electronic device may be monitored in real time, to monitor, in real time, whether the operating frequency bands of the two wireless communication modules both fall within a new coexistence frequency band, so that a receive antenna addition procedure can be entered to add scheduling of a receive antenna in one of the wireless communication modules, thereby facilitating optimization of coexistence interference between the two wireless communication modules.

In some embodiments, in a process in which the electronic device 100 performs antenna scheduling on the wireless communication module 1 based on the receive antenna addition procedure, scheduled receive antennas may be added one by one when a power consumption factor is considered. For example, after scheduling of a part of receive antenna is added, if receive performance of the wireless communication module 1 is relatively good, no scheduled receive antenna needs to continue to be added. On the contrary, a scheduled receive antenna continues to be added. In addition, because a quantity of receive antennas in the wireless communication module 1 is limited, when the added scheduled receive antenna reaches the upper limit, a state in which all receive antennas in the wireless communication module 1 are scheduled to perform receiving may be maintained.

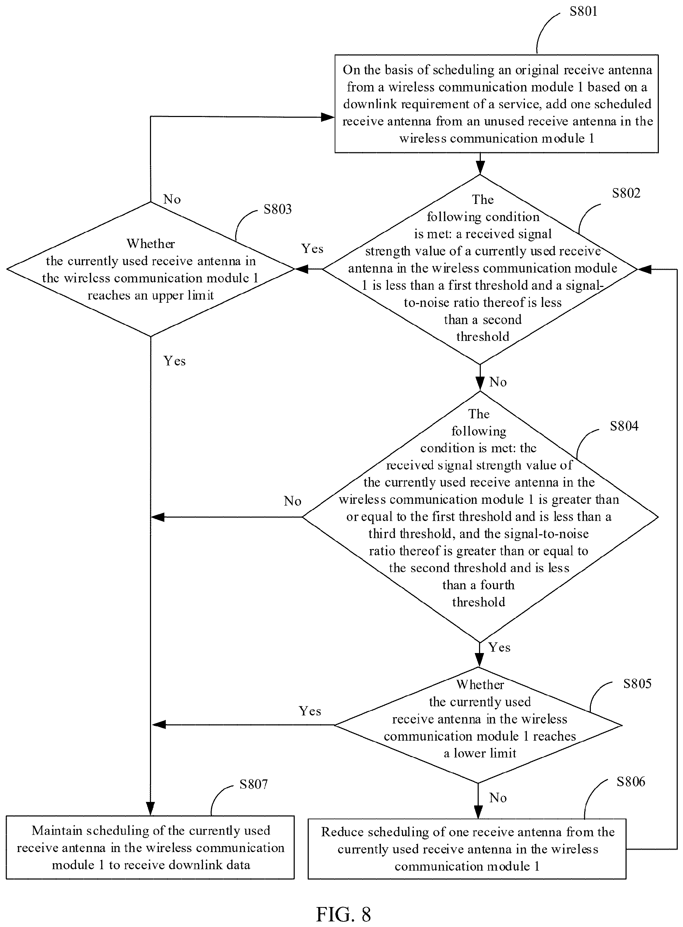

With reference to FIG. 8, a method for adding scheduled receive antennas one by one in the receive antenna addition procedure in this application is described. As shown in FIG. 8, S306 in FIG. 3, FIG. 6, and FIG. 7 may include S801 to S807.

S801: When an operating frequency band of the wireless communication module 1 and an operating frequency band of the wireless communication module 2 belong to one coexistence frequency band, on the basis of scheduling an original receive antenna from the wireless communication module 1 based on a downlink requirement of a service, the electronic device 100 adds one scheduled receive antenna from an unused receive antenna in the wireless communication module 1.

In some embodiments, when the electronic device 100 determines that the operating frequency bands of the two wireless communication modules belong to any coexistence frequency band, that is, when the operating frequency band of the wireless communication module 1 and the operating frequency band of the wireless communication module 2 belong to one coexistence frequency band, scheduling of one receive antenna may be forcibly added as a new receive antenna.

If the foregoing condition of being interfered with is met, it means that a quantity of used receive antennas in the wireless communication module 1 does not reach the upper limit, that is, an unused receive antenna exists in the wireless communication module 1, and the electronic device 100 may add a scheduled receive antenna. It may be understood that, when the electronic device 100 has added a scheduled receive antenna from the wireless communication module 1, the electronic device may select one antenna again from remaining unused receive antennas as another newly scheduled receive antenna.

For example, in the coexistence scenario 2 shown in Table 2, the electronic device 100 may select one receive antenna with a maximum RSRP from the wireless communication module 1 as the original receive antenna based on the downlink requirement of the service, and may further select, one by one, one receive antenna with a maximum RSRP from remaining unused receive antennas in the wireless communication module 1 as a newly scheduled receive antenna.

S802: The electronic device 100 determines whether the following condition is met: a received signal strength value of a currently used receive antenna in the wireless communication module 1 is less than a first threshold and a signal-to-noise ratio thereof is less than a second threshold. If yes, the method enters S803. If no, the method enters S804.

That a received signal strength value of one currently used receive antenna in the wireless communication module 1 is less than the first threshold and a signal-to-noise ratio thereof is less than the second threshold may be used as an antenna addition condition.

It may be understood that, if a received signal strength value of one currently used receive antenna in the wireless communication module 1 is less than the first threshold and a signal-to-noise ratio thereof is less than the second threshold, it indicates that a downlink signal received by the wireless communication module 1 by using the original receive antenna and the added scheduled receive antenna is still a weak signal and is strongly interfered with. In this case, the electronic device 100 may further add scheduling of a new receive antenna from the wireless communication module 1.

Correspondingly, if a received signal strength value of one currently used antenna in the wireless communication module 1 is greater than or equal to the first threshold, it indicates that a downlink signal received by the wireless communication module 1 by using the original receive antenna and the added scheduled receive antenna has a relatively strong signal. If a signal-to-noise ratio of one currently used antenna in the wireless communication module 1 is greater than or equal to the second threshold, it indicates that interference to a downlink signal received by the wireless communication module 1 by using the original receive antenna and the added scheduled receive antenna is relatively weak. That is, current downlink communication quality of the wireless communication module 1 is relatively good, and there is no need to continue to add scheduling of another receive antenna.

S803: The electronic device 100 determines whether the currently used receive antenna in the wireless communication module 1 reaches the upper limit. If yes, the method enters S807. If no, S801 is performed again.

It may be understood that the foregoing upper limit is a total quantity of receive antennas that can operate as RX in the wireless communication module 1. For example, in case of the antenna specification shown in FIG. 2, the upper limit of the receive antenna in the wireless communication module 1 is 4.

S804: The electronic device 100 determines whether the following condition is met: the received signal strength value of the currently used receive antenna in the wireless communication module 1 is greater than or equal to the first threshold and is less than a third threshold, and the signal-to-noise ratio thereof is greater than or equal to the second threshold and is less than a fourth threshold. If yes, the method enters S6805. If no, the method enters S807.

That the received signal strength value of the currently used receive antenna in the wireless communication module 1 is greater than or equal to the first threshold and is less than the third threshold, and the signal-to-noise ratio thereof is greater than or equal to the second threshold and is less than the fourth threshold may be referred to as an antenna reduction condition. The third threshold is greater than the first threshold, and the fourth threshold is greater than the second threshold.

For example, when the wireless communication module 1 is a cellular network module, the received signal strength of the antenna is an RSRP, the first threshold may be -110 dBm, and the third threshold may be -110 dBm. The second threshold may be 10 dB, and the fourth threshold may be 20 dB. Specific values of the third threshold and the fourth threshold in this application are not limited to the foregoing example, and another value may be selected based on an actual requirement. This is not specifically limited herein.

It may be understood that, when the wireless communication module 1 meets the antenna reduction condition, it indicates that current downlink communication quality of the wireless communication module 1 is relatively good and a degree at which the module is interfered with is relatively low, so that the scheduled receive antenna that has been added can be reduced. Correspondingly, when the wireless communication module 1 does not meet the antenna reduction condition, it indicates that current downlink communication quality of the wireless communication module 1 is still relatively poor and a degree at which the module is interfered with is relatively high. Therefore, downlink communication may continue to be performed based on the added scheduled receive antenna.

It may be understood that the received signal strength and the signal-to-noise ratio of each antenna in the wireless communication module 1 generally change in real time, and may fluctuate within a small range. For example, the received signal strength value of the antenna in the wireless communication module 1 may fluctuate within a small range near the first threshold, and the signal-to-noise ratio of the antenna may fluctuate within a small range near the second threshold. For example, actually, a received signal strength value of an antenna may fluctuate by +1 dBm (denoted as a received signal strength fluctuation value), and a signal-to-noise ratio thereof may fluctuate by +0.2 dB (denoted as a signal-to-noise ratio fluctuation value). In this case, if that the received signal strength value of the currently used receive antenna in the wireless communication module 1 is not less than the first threshold and the signal-to-noise ratio thereof is not less than the second threshold is used as a trigger condition for disabling all added scheduled receive antennas, as received signal strength and a signal-to-noise ratio of each antenna fluctuate, a ping-pong effect that the electronic device 100 repeatedly adds a scheduled antenna and disable all added scheduled receive antenna antennas may be caused. This results in waste of computing resources and unnecessary increased power consumption.

In some embodiments, a difference between the third threshold and the first threshold is far greater than the received signal strength fluctuation value, and a difference between the fourth threshold and the second threshold is far greater than the signal-to-noise ratio fluctuation value. Therefore, when a condition that the received signal strength value of the currently used receive antenna in the wireless communication module 1 is less than the first threshold and the signal-to-noise ratio thereof is less than the second threshold is not met, the electronic device 100 does not directly disable all added scheduled receive antennas. Instead, the electronic device 100 disables the used receive antenna or reduces scheduling thereof only when a condition that the received signal strength value of the currently used receive antenna in the wireless communication module 1 is greater than or equal to the first threshold and is less than the third threshold, and the signal-to-noise ratio thereof is greater than or equal to the second threshold and is less than the fourth threshold is met, thereby avoiding a case in which the electronic device repeatedly adds a scheduled antenna and disables all newly scheduled antennas.

In some embodiments, in this application, when the wireless communication module 1 meets the antenna reduction condition, the electronic device 100 may disable newly scheduled receive antennas in the wireless communication module 1 one by one without directly disabling all newly scheduled antennas.

For example, the following implements, with reference to the following S805 and S806, a process of disabling newly scheduled receive antennas in the wireless communication module 1 one by one.

S805: The electronic device 100 determines whether the currently used receive antenna in the wireless communication module 1 reaches a lower limit. If yes, the method enters S807. If no, the method enters S806.

It may be understood that the foregoing lower limit is a quantity of original receive antennas that are in the wireless communication module 1 and that are scheduled based on an original power consumption optimization solution. For example, with reference to the antenna specification shown in FIG. 2, in the coexistence scenario 2, when the wireless communication module 1 is in an idle state or a low-speed state, a quantity of original receive antennas in the wireless communication module 1 is 1. In this case, the lower limit of the used receive antenna in the wireless communication module 1 is 1.

If the currently used receive antenna in the wireless communication module 1 reaches the lower limit, there is no receive antenna that needs to be reduced, and the currently used antenna in the wireless communication module 1 is maintained for downlink communication, that is, use of the original receive antenna in the wireless communication module 1 is maintained for downlink communication.

S806: The electronic device 100 reduces one receive receive antenna from the currently used receive antenna in the wireless communication module 1.

In some embodiments, the electronic device 100 may select one receive antenna with worst receive performance from the currently used receive antenna in the wireless communication module 1, and disable the receive antenna. For example, the receive antenna with worst receive performance may be a receive antenna with a minimum received signal strength value, for example, one receive antenna reduced from the wireless communication module in the coexistence scenario 2 may be a receive antenna with a minimum RSRP among the currently used receive antenna.

S807: The electronic device 100 maintains scheduling of the currently used receive antenna in the wireless communication module 1 to receive a downlink signal.

For example, when all receive antennas in the wireless communication module 1 are enabled, if the wireless communication module 1 does not meet the antenna reduction condition, the electronic device 100 may exit the receive antenna addition procedure, and maintain use of all receive antennas for receiving.

For example, when the original receive antenna is scheduled from the wireless communication module 1, if the wireless communication module 1 does not meet the antenna addition condition, the electronic device 100 may exit the receive antenna addition procedure, and maintain use of the original receive antenna for receiving.

In this way, the antenna addition condition and the antenna reduction condition that may be set in this application may be used to add or reduce scheduled receive antennas one by one based on real-time communication quality of each receive antenna in the wireless communication module 1, thereby helping optimize power consumption.

Next, the communication method in the embodiments of this application is described by using interaction between modules in the electronic device 100.

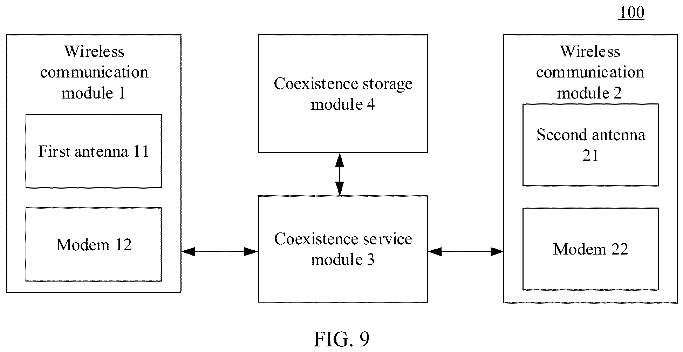

Refer to FIG. 9, which is a schematic diagram of a structure framework of an electronic device according to an embodiment of this application. The electronic device 100 shown in FIG. 9 includes a wireless communication module 1, a wireless communication module 2, a coexistence service module 3, and a storage module 4.

The wireless communication module 1 includes a plurality of antennas 11 and a modem (Modem) 12. The Modem 12 may perform antenna scheduling on the plurality of antennas 11 to select an antenna that operates as RX or TX. For example, when the wireless communication module 1 is in a state such as a low-speed state, the Modem 12 selects, by using a default scheduling solution, one antenna from the plurality of antennas 11 as RX to receive a downlink signal. Alternatively, when the wireless communication module 1 is in a state such as a low-speed state and belongs to one coexistence frequency band with the wireless communication module 2, the Modem 12 may add a scheduled receive antenna by using a receive antenna addition solution, to increase a quantity of antennas that are among the plurality of antennas 11 and that are used as RX to receive the downlink signal.

The wireless communication module 2 includes one or more antennas 21 and a modem (Modem) 22. The Modem 22 may perform antenna scheduling on the plurality of antennas 21, to select an antenna that operates as RX or TX. For example, the wireless communication module 2 may schedule all transmit antennas from the plurality of antennas 21 to send uplink data.

The storage module 4 is configured to store a preset coexistence frequency band.

The coexistence service module 3 is configured to: obtain the preset coexistence frequency band from the storage module 4, and determine whether an operating frequency band of the wireless communication module 1 and an operating frequency band of the wireless communication module 2 belong to any coexistence frequency band, to identify whether the two wireless communication modules are in a coexistence scenario. In this case, when it is identified that the operating frequency bands of the two wireless communication modules belong to one coexistence frequency band, the wireless communication module 1 may be triggered to add a scheduled receive antenna by using a receive antenna addition procedure.

Next, the communication method is described based on the modules in the electronic device 100 shown in FIG. 9 being an execution body.

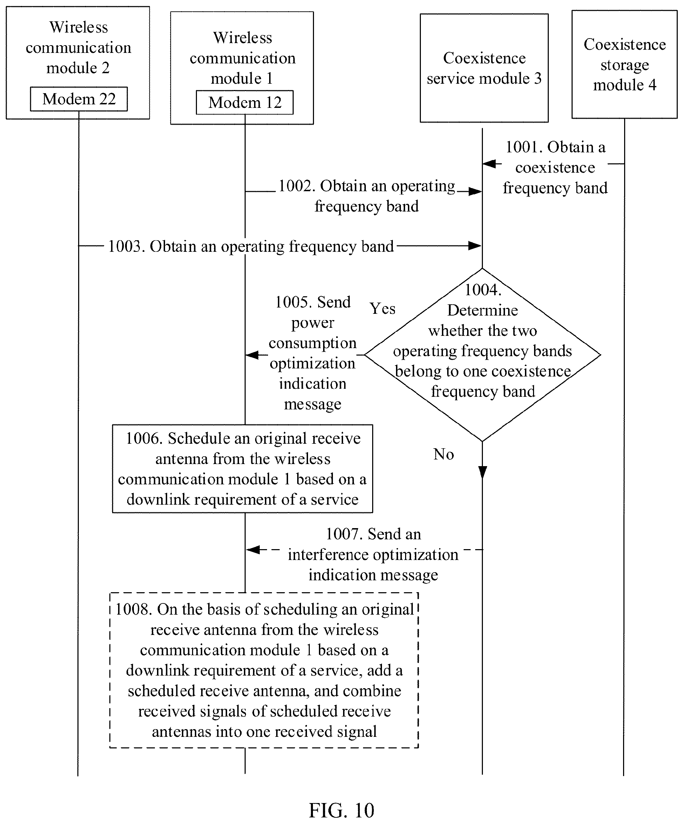

FIG. 10 is a schematic flowchart of a communication method according to this application. A main difference between the method shown in FIG. 10 and the method shown in FIG. 3 lies in that the execution body in FIG. 3 is refined to the modules in the electronic device 100 shown in FIG. 10. In addition, technical details shown in FIG. 3 are still used in this procedure. To avoid repetition, some details are not described herein again.

Specifically, the method shown in FIG. 10 includes the following steps.

S1001: The coexistence server module 3 obtains a preset coexistence frequency band from the coexistence storage module 4. For example, the coexistence server module 3 obtains the preset coexistence frequency band during initialization.

S1002: The coexistence server module 3 obtains an operating frequency band of the wireless communication module 1 from the Modem 12 in the wireless communication module 1. For example, the coexistence server module 3 sends a request to the Modem 12, and the Modem 12 returns the operating frequency band of the wireless communication module 1 in response to the request.

S1003: The coexistence server module 3 obtains an operating frequency band of the wireless communication module 2 from the Modem 22 in the wireless communication module 2. For example, the coexistence server module 3 sends a request to the Modem 22, and the Modem 22 returns the operating frequency band of the wireless communication module 2 in response to the request.

S1004: The coexistence server module 3 determines whether the operating frequency band of the wireless communication module 1 and the operating frequency band of the wireless communication module 2 belong to one coexistence frequency band. If any coexistence frequency band is met, the method enters S1005. If any coexistence frequency band is not met, the method enters S1007.

For detailed descriptions of the foregoing S1001~S1004, refer to related descriptions of S301~S304 in FIG. 3. Details are not described herein again.

S1005: Corresponding to that the operating frequency band of the wireless communication module 1 and the operating frequency band of the wireless communication module 2 do not belong to any coexistence frequency band, the coexistence server module 3 sends a power consumption optimization indication message to the Modem 12, where the power consumption optimization indication message is used to indicate to schedule an original receive antenna from the wireless communication module 1 based on a downlink requirement of a service, that is, start (that is, enable) an original scheduling algorithm.

S1006: The Modem 12 schedules the original receive antenna from the wireless communication module 1 based on the downlink requirement of the service.

For detailed descriptions of the foregoing S1005~S1006, refer to related descriptions of S305 in FIG. 3. Details are not described herein again.

S1007: Corresponding to that the operating frequency band of the wireless communication module 1 and the operating frequency band of the wireless communication module 2 belong to one coexistence frequency band, the coexistence server module 3 sends an interference optimization indication message to the Modem 12, where the interference optimization indication message is used to indicate to add a scheduled receive antenna, that is, start (that is, enable) a receive antenna addition procedure.

S1008: On the basis of scheduling an original receive antenna from the wireless communication module 1 based on a downlink requirement of a service, the Modem 12 adds a scheduled receive antenna, and combines received signals of scheduled receive antennas into one received signal.

For detailed descriptions of the foregoing S1007~S1008, refer to related descriptions of S306 in FIG. 3. Details are not described herein again.

In this way, the coexistence service module 3 set in this application may perform scenario identification on two wireless communication modules, and deliver an interference optimization indication message to one of the wireless communication modules 1. Therefore, downlink communication quality of the wireless communication module 1 is improved by adding scheduling of a receive antenna in the wireless communication module 1.

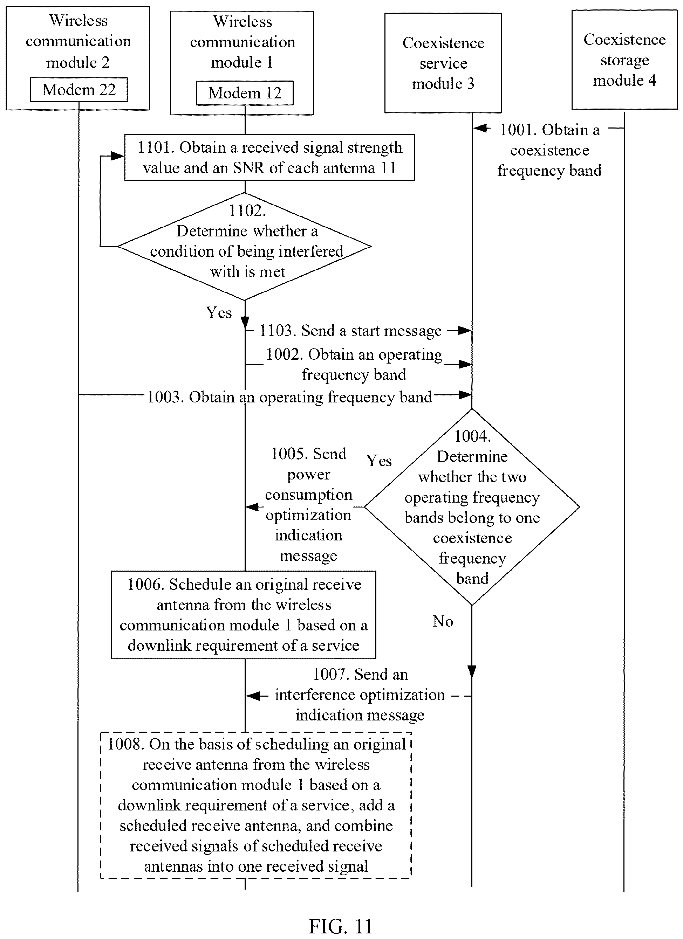

FIG. 11 is a schematic flowchart of a communication method according to this application. A difference between the method shown in FIG. 11 and the method shown in FIG. 10 lies in that before S1001 or S1002 in FIG. 11, a start mechanism defined in S1101~S1103 may be further included. In FIG. 11, that S1101~S1103 are included before S1002 shown in FIG. 10 is used as an example.

Specifically, the method shown in FIG. 11 includes the following steps.

For S1001, S1001 is the same as S1001 in FIG. 10, and details are not described herein again.

S1101: The Modem 12 obtains a received signal strength value and an SNR of each antenna 11.

S1102: The Modem 12 determines whether a condition of being interfered with is met.

The condition of being interfered with may include: A received signal strength value of at least one antenna 11 in the wireless communication module 1 is less than a threshold, an SNR thereof is less than a second threshold, and a used receive antenna in the wireless communication module 1 does not reach an upper limit. If yes, the method enters S1303. If no, the method continues to return to S1301, to continue to monitor a receive state of the antenna in the current wireless communication module 1 and a use case of the receive antenna.

S1103: The Modem 12 sends a start message to the coexistence service module 3, where the start message is used to start the coexistence service module 3. Starting the coexistence service module 3 means triggering the coexistence service module 3 to start to perform coexistence scenario identification on the two wireless communication modules in the electronic device 100.

For S1002~S1006, S1002~S1006 are the same as S1002~S1006 in FIG. 10, and details are not described herein again.

In this case, only when it is determined that the wireless communication module 1 currently has a weak signal and is interfered with, and an unused receive antenna exists, an operation such as coexistence scenario identification and adding a scheduled receive antenna is performed. This helps improve execution efficiency of an antenna scheduling process in the communication method.

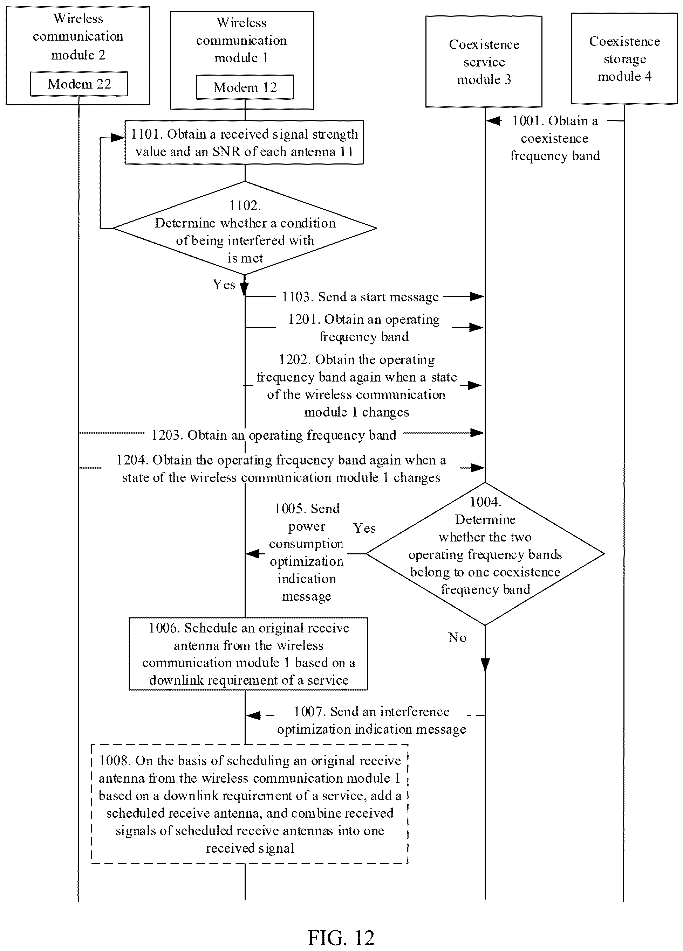

FIG. 12 is a schematic flowchart a communication method according to an embodiment of this application. As an example, the foregoing S1002 and S1003 may be replaced with S1201 to S1204. For example, on the basis of FIG. 11, referring to the method shown in FIG. 12, the foregoing S1002 and S1003 may be replaced with S1201 to S1204. Same steps of the method shown in FIG. 12 as the method shown in FIG. 11 and related descriptions thereof are not described again below.

S1201: The Modem 12 obtains an operating frequency band of the wireless communication module 1.

S1202: The Modem 12 obtains the operating frequency band of the wireless communication module 1 again when a state of the wireless communication module 1 changes.

S1203: The Modem 22 obtains an operating frequency band of the wireless communication module 2.

S1204: The Modem 22 obtains the operating frequency band of the wireless communication module 2 again when a state of the wireless communication module 2 changes.

For descriptions of S1201 to S1204, refer to related descriptions of S701 to S704 in FIG. 7. Details are not described herein again.

It may be understood that the Modem 12 and the Modem 22 may actively report the operating frequency bands to the coexistence service module 3, or may return the operating frequency bands in case of a request from the coexistence service module 3.

In this case, when a state of at least one wireless communication module in the electronic device 100 changes, and the coexistence service module 3 determines that the two wireless communication modules both fall within one coexistence frequency band simultaneously, antenna scheduling may continue to be performed based on a receive antenna addition procedure, thereby helping optimize coexistence interference between the two wireless communication modules.

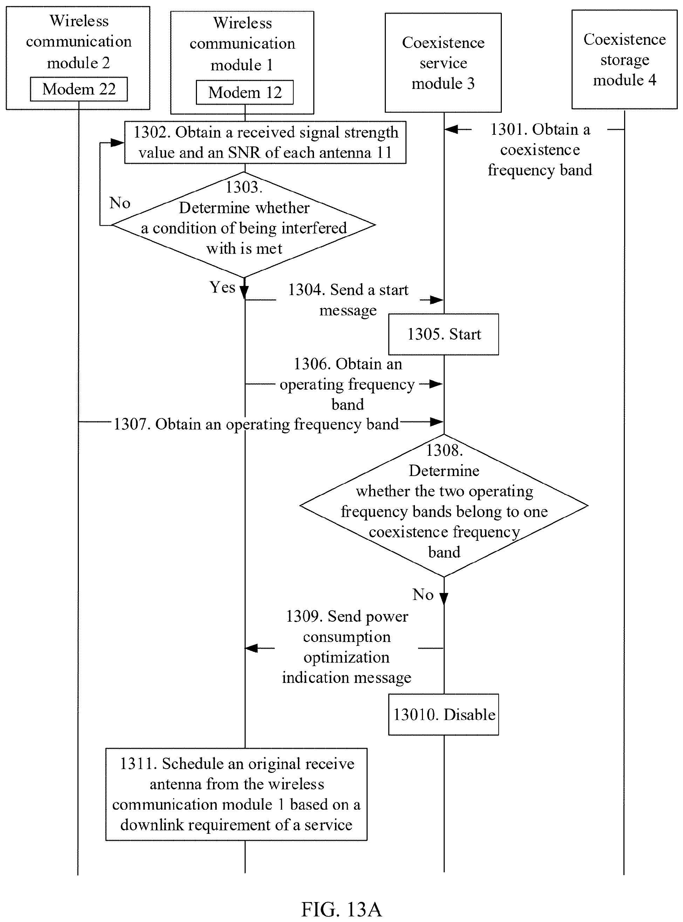

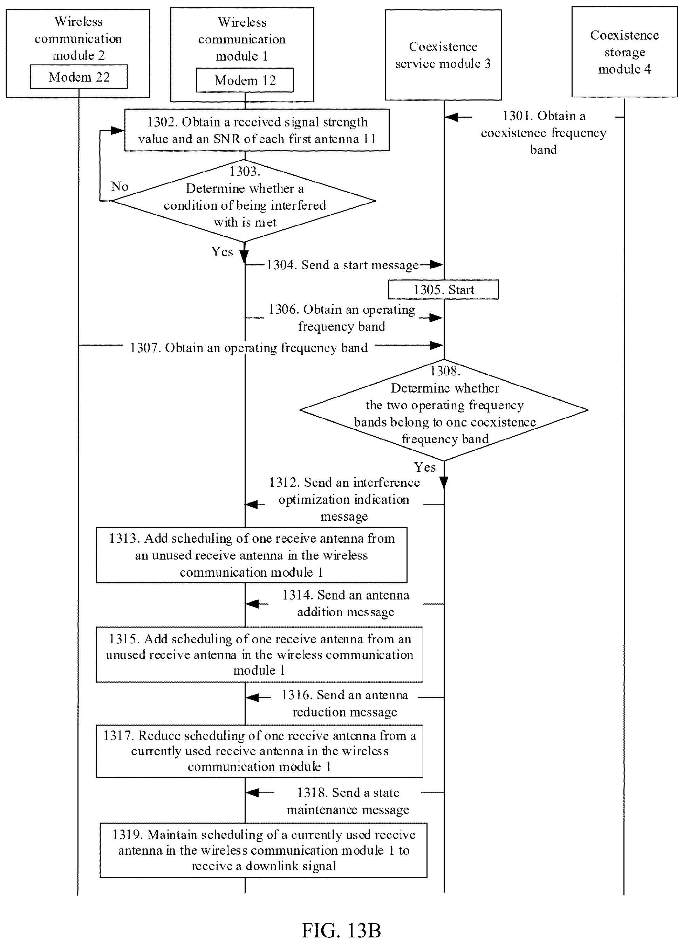

FIG. 13A and FIG. 13B are communication methods according to an embodiment of this application. A difference between the methods and the method shown in FIG. 11 lies in that a receive antenna addition procedure in the methods shown in FIG. 13A and FIG. 13B is implemented by adding scheduled receive antennas one by one. FIG. 13A mainly shows a procedure of performing antenna scheduling based on an original scheduling algorithm. FIG. 13B mainly shows a procedure of performing antenna scheduling based on the receive antenna addition procedure. Specifically, the method shown in FIG. 13A includes the following steps.

S1301: The coexistence server module 3 obtains a preset coexistence frequency band from the coexistence storage module 4.

S1302: The Modem 12 obtains a received signal strength value and a signal-to-noise ratio of each antenna in the wireless communication module 1.

S1303: The Modem 12 determines, based on the received signal strength value and the signal-to-noise ratio of each antenna and a quantity of used receive antennas in the wireless communication module 1, whether the wireless communication module 1 meets a condition of being interfered with. If yes, the method enters S1304. If no, the method continues to return to S1302 to continue to monitor a receive state of the antenna in the current wireless communication module 1.

S1304: The Modem 12 sends a start message to the coexistence service module 3, where the start message is used to start the coexistence service module 3.

S1305: The coexistence service module 3 is started.

S1306: The coexistence server module 3 obtains an operating frequency band of the wireless communication module 1 from the Modem 12 in the wireless communication module 1.

S1307: The coexistence server module 3 obtains an operating frequency band of the wireless communication module 2 from the Modem 22 in the wireless communication module 2.

S1308: The coexistence server module 3 determines whether the operating frequency band of the wireless communication module 1 and the operating frequency band of the wireless communication module 2 belong to one coexistence frequency band. If the two operating frequency bands do not belong to any coexistence frequency band, the method enters S1309 shown in FIG. 13A. If any coexistence frequency band is met, the method enters S1312 shown in FIG. 13B.

S1309: Corresponding to that the operating frequency band of the wireless communication module 1 and the operating frequency band of the wireless communication module 2 do not belong to any coexistence frequency band, the coexistence server module 3 sends a power consumption optimization indication message to the Modem 12, where the power consumption optimization indication message is used to indicate to schedule an original receive antenna from the wireless communication module 1 based on a downlink requirement of a service, that is, start (that is, enable) the original scheduling algorithm.

S1310: The coexistence service module 3 is disabled.

S1311: The Modem 12 schedules the original receive antenna from the wireless communication module 1 based on the downlink requirement of the service.

In some embodiments, FIG. 13B also includes the foregoing S1301~S1308, and the method shown in FIG. 13B further includes the following steps.

S1312: Corresponding to that the operating frequency band of the wireless communication module 1 and the operating frequency band of the wireless communication module 2 belong to one coexistence frequency band, the coexistence server module 3 sends an interference optimization indication message to the Modem 12, where the interference optimization indication message is used to indicate to add a scheduled receive antenna, that is, start (that is, enable) the receive antenna addition procedure.

S1313: The Modem 12 adds scheduling of one receive antenna from an unused receive antenna in the wireless communication module 1.

S1314: When it is determined whether the wireless communication module 1 meets an antenna addition condition and a currently used receive antenna does not reach an upper limit, the coexistence service module 3 sends a diversity add message to the Modem 12, where the diversity add message is used to indicate to add scheduling of one receive antenna to the wireless communication module 1.

S1315: The Modem 12 adds scheduling of one receive antenna from an unused receive antenna in the wireless communication module 1.

S1316. When it is determined that the wireless communication module 1 meets an antenna reduction condition and a currently used receive antenna does not reach a lower limit, the coexistence service module 3 sends a diversity reduction message to the Modem 12, where the diversity reduction message is used to indicate to reduce scheduling of one receive antenna from the wireless communication module 1.

S1317: The Modem 12 reduces scheduling of one receive antenna from the currently used receive antenna in the wireless communication module 1.

S1318: When it is determined whether the wireless communication module 1 meets an antenna addition condition and a currently used receive antenna reaches an upper limit, or the wireless communication module 1 meets an antenna reduction condition and a currently used receive antenna reaches a lower limit, the coexistence service module 3 sends a state maintenance message to the Modem 12, where the state maintenance message is used to indicate the Modem 12 to exit the receive antenna addition procedure and maintain a state of the currently used receive antenna.

S1319: The Modem 12 maintains scheduling of the currently used receive antenna in the wireless communication module 1 to receive a downlink signal.

For detailed descriptions of the foregoing S1312~S1319, refer to related descriptions of S801~S807 in FIG. 8. Details are not described herein again.

In this way, in this application, when the two wireless communication systems of the electronic device are in a coexistence scenario, receive antennas of one of the wireless communication modules may be disabled or enabled one by one by using the coexistence service module 3, thereby improving downlink communication quality of the wireless communication module.

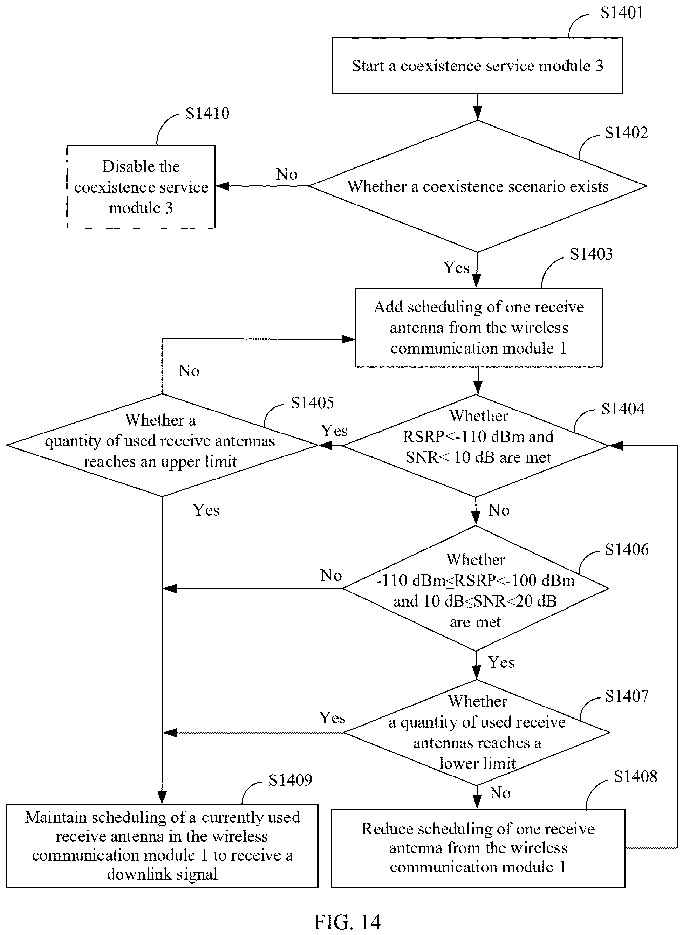

In some embodiments, with reference to the antenna specification shown in FIG. 2 and the hardware structure shown in FIG. 9, FIG. 14 is a schematic diagram of an antenna scheduling procedure in a communication method according to this application. The procedure may be executed by the electronic device 100, and the procedure includes the following steps.

S1401: Start the coexistence service module 3.

S1402: Determine whether a coexistence scenario exists. If the determining is yes, the method enters S1403. If the determining is no, the method enters S1410.

S1403. The coexistence service module 3 notifies the Modem 12 to add scheduling of one receive antenna from the wireless communication module 1, that is, selects one receive antenna with best performance among remaining receive antennas.

S1404. Determine whether RSRP<-110 dBm and SNR<10 dB are met, that is, whether each antenna in the wireless communication module 1 meets RSRP<-110 dBm and SNR<10 dB. If yes, the method enters S1405. If no, the method enters S1406.

S1405: Determine whether a quantity of used receive antennas reaches an upper limit. That is, it is determined whether a quantity of used receive antennas in the wireless communication module 1 reaches the upper limit. If yes, the method enters S1409. If no, S1403 is performed again.

S1406: Determines whether -110 dBm≦RSRP<-100 dBm and 10 dB≦SNR<20 dB are met, that is, whether each antenna in the wireless communication module 1 meets -110 dBm≦RSRP<-100 dBm and 10 dBESNR<20 dB. If yes, the method enters S1407. If no, the method enters S1409.

S1407: Determine whether a quantity of used receive antennas reaches a lower limit. That is, it is determined whether the quantity of used receive antennas in the wireless communication module 1 reaches the lower limit. If yes, the method enters S1408. If no, S1409 is performed again.

S1408: Reduce scheduling of one receive antenna from the wireless communication module 1. In addition, after S1408 is performed, S1404 may continue to be performed.

S1409: Maintain scheduling of a currently used receive antenna in the wireless communication module 1 to receive a downlink signal.

S1410: Disable the coexistence service module 3.

In this way, in this application, when the two wireless communication modules of the electronic device are in a coexistence scenario, the coexistence server module 3 is started to implement a receive antenna addition procedure. When the two wireless communication modules are not in a coexistence scenario, the coexistence server module 3 does not need to be started. This helps reduce power consumption and improve efficiency of antenna scheduling.

In some embodiments, that the electronic device 100 provided in this embodiment of this application is a mobile phone is used as an example to describe the hardware structure of the electronic device 100.

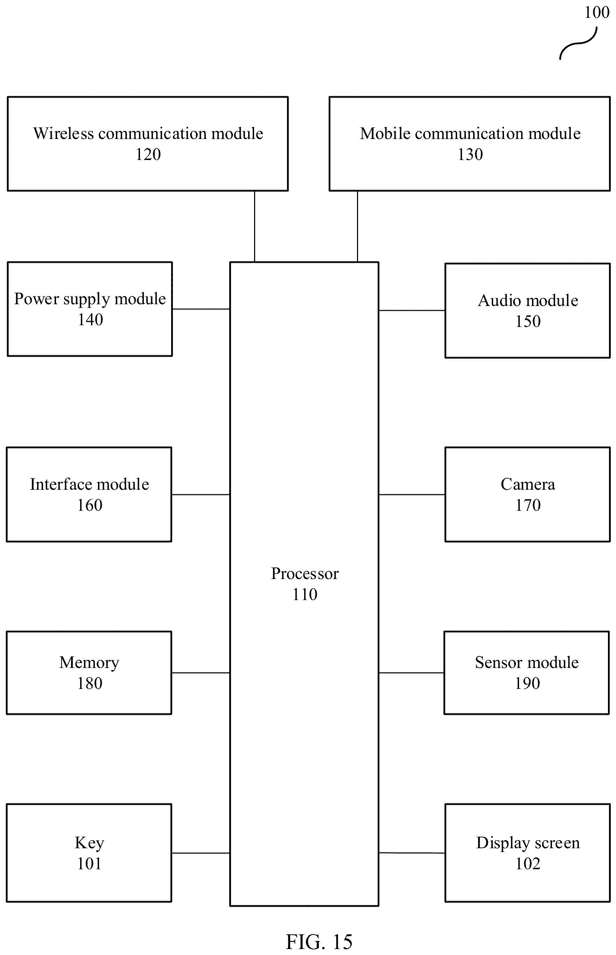

As shown in FIG. 15, the mobile phone 100 may include a processor 110, a power supply module 140, a memory 180, a mobile communication module 130, a wireless communication module 120, a sensor module 190, an audio module 150, a camera 170, an interface module 160, a key 101, a display screen 102, and the like.

It may be understood that the structure shown in this embodiment of the present invention does not constitute a specific limitation on the mobile phone 100. In some other embodiments of this application, the mobile phone 100 may include more or fewer components than those shown in the figure, or combine some components, or split some components, or have different component arrangements. The parts shown in the figure may be implemented by hardware, software, or a combination of software and hardware.

The processor 110 may include one or more processing units, for example, may include a processing module or a processing circuit of a central processing unit (central processing unit, CPU), a graphics processing unit (graphics processing unit, GPU), a digital signal processor DSP, a micro-programmed control unit (micro-programmed control unit, MCU), an artificial intelligence (artificial intelligence, AI) processor, or a field programmable gate array (field programmable gate array, FPGA). Different processing units may be independent devices, or may be integrated into one or more processors. A storage unit may be disposed in the processor 110, to store instructions and data. In some embodiments, the storage unit in the processor 110 is a cache 180.

The power supply module 140 may include a power supply, a power management component, and the like. The power supply may be a battery. The power management module is configured to: manage charging of the power supply, and supply power from the power supply to another module. In some embodiments, the power management component includes a charging management module and a power management module. The charging management module is configured to receive a charging input from a charger. The power management module is configured to connect the power supply, the charging management module, and the processor 110. The power management module receives an input from the power supply and/or an input from the charging management module, to supply power to the processor 110, the display screen 102, the camera 170, the wireless communication module 120, and the like.

The mobile communication module 130 may include but is not limited to an antenna, a power amplifier, a filter, a low noise amplifier (low noise amplify, LNA), and the like. The mobile communication module 130 may provide a solution for wireless communication that is applied to the mobile phone 100 and that includes 2G/3G/4G/5G and the like. The mobile communication module 130 may receive an electromagnetic wave by using the antenna, perform processing such as filtering or amplification on the received electromagnetic wave, and transmit a processed electromagnetic wave to the modem processor for demodulation. The mobile communication module 130 may further amplify a signal modulated by the modem processor, and convert the signal into an electromagnetic wave by using the antenna for radiation. In some embodiments, at least some functional modules in the mobile communication module 130 may be disposed in the processor 110. In some embodiments, at least some functional modules in the mobile communication module 130 may be disposed in a same device as at least some modules in the processor 110. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), Bluetooth (Bluetooth, BT), a global navigation satellite system (global navigation satellite system, GNSS), a WLAN, a near field communication (near field communication, NFC) technology, frequency modulation (frequency modulation, FM) and/or field communication, NFC), an infrared (infrared, IR) technology, and the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

The wireless communication module 120 may include an antenna, and send/receive an electromagnetic wave by using the antenna. The wireless communication module 120 may provide a solution for wireless communication that is applied to the mobile phone 100 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, and the like. The mobile phone 100 may communicate with a network and another device by using a wireless communication technology.

In some embodiments, the mobile communication module 130 and the wireless communication module 120 of the mobile phone 100 may be alternatively located in a same module. For example, in this application, the wireless communication module 1 and the wireless communication module 2 in the electronic device 100 are respectively the mobile communication module 130 and the wireless communication module 120. Correspondingly, in a scenario in which N41 of the cellular network coexists with 2.4G Wi-Fi, the mobile communication module 130 supports a cellular network and includes four antennas, and the wireless communication module 120 supports Wi-Fi and includes two antennas.

The display screen 102 is configured to display a human-computer interaction interface, an image, a video, and the like. The display screen 102 includes a display panel. The display panel may be a liquid crystal display (liquid crystal display, LCD), an organic light-emitting diode (organic light-emitting diode, OLED), an active-matrix organic light emitting diode or active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), or the like.

The sensor module 190 may include an optical proximity sensor, a pressure sensor, a gyroscope sensor, a barometric pressure sensor, a magnetic sensor, an acceleration sensor, a distance sensor, a fingerprint sensor, a temperature sensor, a touch sensor, an ambient light sensor, a bone conduction sensor, and the like.

The audio module 150 is configured to convert digital audio information into an analog audio signal for output, or is configured to convert an analog audio input into a digital audio signal. The audio module 150 may be further configured to encode and decode an audio signal. In some embodiments, the audio module 150 may be disposed in the processor 110, or some functional modules of the audio module 150 may be disposed in the processor 110. In some embodiments, the audio module 150 may include a speaker, an earpiece, a microphone, and a headset jack.

The camera 170 is configured to capture a still image or a video. An optical image of an object is generated through a lens and is projected onto a photosensitive element. The photosensitive element converts an optical signal into an electrical signal, and then transfers the electrical signal to image signal processing (Image Signal Processing, ISP), to convert the electrical signal into a digital image signal. The mobile phone 100 may implement a photographing function by using the ISP, the camera 170, the video codec, the graphics processing unit (Graphic Processing Unit, GPU), the display screen 102, the application processor, and the like.

The interface module 160 includes an external memory interface, a universal serial bus (universal serial bus, USB) interface, a subscriber identity module (subscriber identification module, SIM) card interface, and the like. The external memory interface may be configured to connect to an external memory card such as a MicroSD card, to extend a storage capability of the mobile phone 100. The external memory card communicates with the processor 110 through the external memory interface, to implement a data storage function. The universal serial bus interface is configured for the mobile phone 100 to communicate with another electronic device. The subscriber identity module card interface is configured to communicate with an SIM card mounted to the mobile phone 100, such as reading a phone number stored in the SIM card, or writing a phone number to the SIM card.

In some embodiments, the mobile phone 100 further includes the key 101, a motor, an indicator, and the like. The key 101 may include a volume key, an on/off key, and the like. The motor is configured to generate a vibration effect of the mobile phone 100, for example, when the mobile phone 100 of a user is called, generate vibration to prompt the user to answer an incoming call of the mobile phone 100. The indicator may include a laser indicator, a radio frequency indicator, an LED indicator, and the like.

In some embodiments, this application provides a readable medium. The readable medium stores instructions, and when the instructions are executed on an electronic device, the electronic device is enabled to perform the communication method in any one of FIG. 3 to FIG. 14.

Embodiments of mechanisms disclosed in this application may be implemented by using hardware, software, firmware, or a combination of these implementation methods. The embodiments of this application may be implemented as a computer program or program code executed on a programmable system. The programmable system includes at least one processor, a storage system (including a volatile memory and a non-volatile memory and/or a storage element), at least one input device, and at least one output device.

The program code may be applied to an input instruction to perform various functions described in this application and generate output information. The output information may be applied to one or more output devices in a known manner. For the purpose of this application, the processing system includes any system having a processor such as a digital signal processor (DSP), a microcontroller, an application-specific integrated circuit (ASIC), or a microprocessor.

The program code may be implemented by using an advanced programming language or an object-oriented programming language, to communicate with the processing system. When required, the program code may alternatively be implemented by using an assembly language or a machine language. In fact, the mechanisms described in this application are not limited to a scope of any specific programming language. In any case, the language may be a compilation language or an interpretation language.

In some cases, the disclosed embodiments may be implemented by hardware, firmware, software, or any combination thereof. The disclosed embodiments may alternatively be implemented as instructions carried or stored on one or more transitory or non-transitory machine-readable (for example, computer-readable) storage media, and the instructions may be read and executed by one or more processors. For example, the instructions may be distributed by using a network or another computer-readable medium. Therefore, the machine-readable medium may include any mechanism used to store or transmit information in a machine (for example, computer) readable form, including but not limited to a floppy disk, a compact disc, an optical disc, a read-only memory (CD-ROMs), a magneto-optical disk, a read-only memory (ROM), a random access memory (RAM), an erasable programmable read-only memory (EPROM), an electrically erasable programmable read-only memory (EEPROM), a magnetic card or an optical card, a flash memory, or a tangible machine-readable storage configured to transmit information (such as a carrier, an infrared signal, and a digital signal) via the Internet in an electrical, optical, or acoustic form or another form of propagation signal. Therefore, the machine-readable medium includes any type of machine-readable medium suitable for storing or transmitting electronic instructions or information in the machine (for example, computer) readable form.

In the accompanying drawings, some structure or method features may be shown in a particular arrangement and/or order. However, it should be understood that such particular arrangement and/or sorting may not be required. Instead, in some embodiments, these features may be arranged in a manner and/or order different from that shown in the illustrative accompanying drawings. In addition, inclusion of the structure or method features in a particular figure does not imply that all embodiments need to include the features. In some embodiments, these features may not be included, or these features may be combined with other features.

It should be noted that all the units/modules mentioned in the device embodiments of this application are logical units/modules. Physically, a logical unit/module may be a physical unit/module, or may be a part of a physical unit/module, or may be implemented as a combination of a plurality of physical units/modules. Physical implementations of these logical units/modules are not most important, and only a combination of functions implemented by these logical units/modules is a key to resolving the technical problem proposed in this application. In addition, to highlight the innovative part of this application, in the foregoing device embodiments of this application, units/modules that are not closely related to resolving the technical problem proposed in this application are not introduced. This does not mean that no other units/modules exist in the foregoing device embodiments.

It should be noted that in the examples and specification of this patent, relational terms such as first and second are only used to distinguish one entity or operation from another entity or operation, and do not necessarily require or imply that there is any such actual relationship or order between these entities or operations. In addition, the term "include", "comprise", or any other variant thereof is intended to cover non-exclusive inclusion, so that a process, method, article, or device that includes a series of elements includes not only those elements but also other elements that are not expressly listed, or includes elements inherent to such a process, method, article, or device. Without further limitation, the element defined by the sentence "including a" does not exclude that other identical elements also exist in the process, method, article, or device including the element.

Although this application has been illustrated or described with reference to some preferred embodiments of this application, a person of ordinary skill in the art should understand that various modifications may be made to forms and details without departing from the spirit and scope of this application.

## Claims

1. A communication method, applied to an electronic device, wherein the electronic device comprises a first communication module and a second communication module, and the first communication module comprises a first antenna and a second antenna; and
the method comprises:
detecting that the electronic device receives a first downlink signal by using the first antenna, and detecting that the first communication module operates on a first operating frequency band and the second communication module operates on a second operating frequency band, wherein the first operating frequency band and the second operating frequency band meet an interference condition; and
adding scheduling of the second antenna to receive the first downlink signal.

2. The method according to claim 1, wherein the method further comprises:
performing combination processing on the first downlink signal received by the first antenna and the first downlink signal received by the second antenna, to obtain a second downlink signal.

3. The method according to claim 1 or 2, wherein the method further comprises:
determining that the first communication module meets an antenna addition condition and an unused third antenna exists in the first communication module; and
adding scheduling of the third antenna to receive the first downlink signal, wherein
the antenna addition condition comprises: a received signal strength value of a used antenna in the first communication module is less than a first threshold, and a signal-to-noise ratio of the used antenna in the first communication module is less than a second threshold.

4. The method according to claim 3, wherein the method further comprises:
performing combination processing on the first downlink signal received by the first antenna, the first downlink signal received by the second antenna, and the first downlink signal received by the third antenna, to obtain a third downlink signal.

5. The method according to claim 3 or 4, wherein the method further comprises:
determining that the first communication module meets the antenna addition condition and no unused antenna exists in the first communication module; and
continuing to schedule the used antenna in the first communication module to receive the first downlink signal.

6. The method according to claim 5, wherein the second antenna is an antenna with a maximum received signal strength value among an antenna other than the first antenna in the first communication module; and
the third antenna is an antenna with a maximum received signal strength value among an antenna other than the first antenna and the second antenna in the first communication module.

7. The method according to any one of claims 1 to 6, wherein the method further comprises:
determining that the first communication module meets an antenna reduction condition and the used antenna in the first communication module is greater than a lower limit; and
reducing scheduling of one antenna from the used antenna in the first communication module, wherein the lower limit is a quantity of antennas scheduled from the first communication module based on a downlink service requirement, wherein
the antenna reduction condition comprises: the received signal strength value of the used antenna in the first communication module is greater than or equal to the first threshold and is less than a third threshold, and the signal-to-noise ratio of the used antenna in the first communication module is greater than or equal to the second threshold and is less than a fourth threshold.

8. The method according to claim 7, wherein the method further comprises:
determining that the first communication module meets the antenna reduction condition and the used antenna in the first communication module is equal to the lower limit; and
continuing to schedule the used antenna in the first communication module to receive the first downlink signal.

9. The method according to claim 7, wherein the antenna whose scheduling is reduced from the used antenna in the first communication module is an antenna with a minimum received signal strength value among the used antenna in the first communication module.

10. The method according to claim 1, wherein the interference condition comprises: the first operating frequency band and the second operating frequency band belong to two frequency bands in a target coexistence frequency band, wherein
the two frequency bands in the target coexistence frequency band meet at least one of the following conditions:
a difference between a maximum value of a range of the first operating frequency band and a minimum value of a range of the second operating frequency band is less than or equal to a preset difference; and
a difference between an integer multiple of the maximum value of the range of the first operating frequency band and the minimum value of the range of the second operating frequency band is less than or equal to the preset difference.

11. The method according to claim 1, wherein the method further comprises:
determining that the first communication module meets a condition of being interfered with, wherein the condition of being interfered with comprises: a received signal strength value of the first antenna is less than a first threshold, a signal-to-noise ratio SNR of the first antenna is less than a second threshold, and an unused antenna exists in the first communication module; and
obtaining the first operating frequency band of the first communication module and the second operating frequency band of the second communication module.

12. The method according to claim 1, wherein the method further comprises:
determining that a state of at least one of the first communication module and the second communication module changes; and
obtaining the first operating frequency band of the first communication module and the second operating frequency band of the second communication module.

13. The method according to claim 1, wherein the method further comprises:
determining that the first operating frequency band and the second operating frequency band do not meet the interference condition; and
continuing to schedule the first antenna to receive the first downlink signal.

14. The method according to claim 1, wherein the second communication module comprises a fourth antenna, and the method further comprises:
scheduling the fourth antenna to send an uplink signal.

15. The method according to claim 1, wherein the first communication module and the second communication module comprise at least one of the following:
a cellular network module, a wireless local area network Wi-Fi module, and a Bluetooth module.

16. The method according to claim 15, wherein the first communication module is a cellular network module, and received signal strength of a corresponding antenna comprises a reference signal received power RSRP; or
the first communication module is a Wi-Fi module, and received signal strength of a corresponding antenna comprises a received signal strength indicator RSSI.

17. A readable medium, wherein the readable medium stores instructions, and when the instructions are executed on an electronic device, the electronic device is enabled to perform the communication method according to any one of claims 1 to 16.

18. An electronic device, comprising: a memory, configured to store instructions to be executed by one or more processors of the electronic device; and a processor, being one of the processors of the electronic device and configured to perform the communication method according to any one of claims 1 to 16.

19. A chip, comprising a circuit, wherein the circuit is configured to perform the communication method according to any one of claims 1 to 16.
